# EUROPEAN PATENT APPLICATION

(11) **EP 4 270 183 A1**
(43) Date of publication of application: **01.11.2023**
(21) Application number: 21914529.9
(22) Date of filing: 29.12.2021
(51) Int. Cl.: G06F 9/451, G06F 9/455

(54) **PUBLIC CLOUD TENANT SERVICE MANAGEMENT METHOD AND DEVICE**

(30) Priority: 30.12.2020 CN 202011630366
(71) Applicant: Huawei Cloud Computing Technologies Co., Ltd., Guizhou 550025 (CN)
(72) Inventor: FU, Senbo, Shenzhen, Guangdong 518129 (CN); ZHANG, Zhengxian, Shenzhen, Guangdong 518129 (CN)
(74) Representative: Gill Jennings & Every LLP
(86) International application number: PCT/CN2021/142621
(87) International publication number: WO 2022/143797

(57) **Abstract**

This application discloses a public cloud tenant service management method and apparatus, and relates to the field of cloud technologies. The method can improve user experience when a cloud tenant manages an owned virtual instance. The method is run on a cloud platform, and the method includes: providing a cloud service control interface, and determining a plurality of virtual instances purchased by a tenant through the cloud service control interface. The method further includes: determining, in the plurality of virtual instances purchased by the tenant, an instance cluster of virtual instances for supporting a same application service, and displaying, on the cloud service control interface, a topological relationship diagram of the virtual instances in the instance cluster.

## Description

This application claims priority to Chinese Patent Application No. 202011630366.9, filed with the China National Intellectual Property Administration on December 30, 2020 and entitled "PUBLIC CLOUD TENANT SERVICE MANAGEMENT METHOD AND APPARATUS", which is incorporated herein by reference in its entirety.

### TECHNICAL FIELD

This application relates to the field of cloud technologies, and in particular, to a public cloud tenant service management method and apparatus.

### BACKGROUND

A cloud (cloud) is a popular platform for providing virtual computing and storage. A function of a service run on the cloud is usually implemented by a virtual instance (for example, a virtual machine (virtual machine, VM) and a container) run on a physical machine, to provide a required service for a user. Different virtual instances may provide different services.

In this way, a cloud tenant may run service applications developed by the cloud tenant through a plurality of virtual instances purchased from a cloud provider, and further provide different services for the user by using these service applications.

Based on this, how to improve user experience of a cloud tenant of a public cloud when the cloud tenant manages a virtual instance for running a service application is a technical problem to be urgently resolved.

### SUMMARY

This application provides a public cloud tenant service management method and apparatus. The method can improve user experience when a cloud tenant manages an owned virtual instance.

To achieve the foregoing objective, this application provides the following technical solutions:
According to a first aspect, this application provides a public cloud tenant service management method. The method is run on a cloud platform. The method includes: providing a cloud service control interface; determining an instance cluster of virtual instances for supporting a same application service from a plurality of virtual instances purchased by a tenant through the cloud service control interface; and displaying a topological relationship diagram of the virtual instances in the instance cluster on the cloud service control interface.

Based on the method provided in this application, a topological relationship diagram of virtual instances in an instance cluster that has a topological association relationship can be displayed to a tenant that has these virtual instances. In this way, a topological relationship of a virtual instance in an instance cluster is visualized, so that user experience when a tenant manages a plurality of virtual instances purchased by the tenant can be improved.

In a possible design manner, the "displaying a topological relationship diagram of the virtual instances in the instance cluster on the cloud service control interface" includes: providing a topological relationship diagram display interface for receiving a trigger command input by the tenant; obtaining topology information of the virtual instances in the instance cluster based on the received trigger command; and displaying the topological relationship diagram of the virtual instances in the instance cluster obtained by the topology information on the cloud service control interface.

Based on the possible design, the tenant can obtain a topological relationship diagram of a purchased virtual instance at any time, thereby improving flexible application of the method provided in this application.

In another possible design manner, the topology information is determined based on packet header information of a connection establishment request acknowledgment packet for establishing connection communication when the connection communication is established between any two virtual instances in the plurality of virtual instances.

Based on the possible design, in the method provided in this application, a dependency relationship between virtual instances may be determined by using the packet header information of the connection establishment request acknowledgment packet, and then a topological relationship diagram of a plurality of virtual instances that have the dependency relationship and that are for supporting a same application service may be constructed. It can be learned that the method does not involve service data content of a user, that is, a dependency relationship between a plurality of virtual instances may be determined through analysis on a premise that privacy of user data is ensured, and then a topological relationship diagram of the plurality of virtual instances is obtained.

In another possible design manner, the method further includes: obtaining performance information of each virtual instance in the instance cluster; and displaying the performance information of each virtual instance in the instance cluster in the topological relationship diagram.

Based on the possible design, in the method provided in this application, the performance information of the virtual instance represented by a node may be displayed on each node in the foregoing obtained topological relationship diagram, to further improve user experience when the tenant manages the plurality of virtual instances purchased by the tenant.

In another possible design manner, for any virtual instance in the foregoing instance cluster, performance information of the any virtual instance is determined based on packet header information of a packet sent or received by the any virtual instance when the any virtual instance serves as a dependency server.

In another possible design manner, the packet header information includes a source address, a source port, a destination address, and a destination port of the packet. The foregoing packet header information may further include a control flag, a packet size, and a time stamp of a packet that includes the packet header information.

In another possible design manner, for any virtual instance in the foregoing instance cluster, the performance information of the any virtual instance includes: in a preset period, at least one of a packet exchange delay of the any virtual instance, a quantity of service requests received by the any virtual instance, or a quantity of service requests to which the any virtual instance does not respond.

Based on the several possible designs, performance information of a virtual instance that serves as a dependency server in the instance cluster may be determined based on packet information of a packet sent or received by the virtual instance. It can be learned that the method does not involve the service data content of the user, that is, the performance information of the virtual instance that serves as the dependency server may be analyzed and determined on the premise that the privacy of the user data is ensured.

In another possible design manner, the performance information of each virtual instance in the instance cluster is for determining a performance score of each virtual instance when the application service is implemented. The performance score of each virtual instance when the application service is implemented is for determining an abnormal virtual instance whose performance is abnormal.

The method further includes: marking the determined abnormal virtual instance in the instance cluster in the topological relationship diagram.

Based on the possible design, in the method provided in this application, the abnormal virtual instance may be further marked in the foregoing obtained topological relationship diagram. By marking the abnormal virtual instance in the topological relationship diagram, an objective of reporting alarms to users can be achieved. In this way, the user can repair the virtual instance in time, for example, scale out the virtual instance. Therefore, by using the method, user experience when the tenant manages the plurality of virtual instances purchased by the tenant is further improved.

In another possible design manner, if a performance score higher than a threshold exists in the performance score of each virtual instance in the instance cluster when the application service is implemented, a virtual instance whose performance score is higher than the threshold is an abnormal virtual instance. If no performance score higher than a threshold exists in the performance score of each virtual instance in the instance cluster when the application service is implemented, no abnormal virtual instance exists in the instance cluster.

In another possible design manner, if performance of the virtual instances in the instance cluster when the application service is implemented is sorted in descending order, virtual instances whose performance ranks top m are abnormal virtual instances, and virtual instances whose performance ranks after the top m are normal virtual instances.

Based on the possible design, in the method provided in this application, the abnormal virtual instance may be directly determined based on the determined performance score. Compared with the abnormal virtual instance determined based on resource utilization and a network delay that is obtained by a ping operation, the method enables the abnormal virtual instance to be located more accurately on the premise that the privacy of the user data is ensured. This is because the resource utilization cannot accurately reflect the performance of the virtual instance, and the network delay obtained by the ping operation cannot directly reflect the performance of the virtual instance.

In another possible design manner, the method further includes: obtaining first resource utilization information of a network device that runs each virtual instance in the instance cluster, and obtaining second resource utilization information of each virtual instance in the instance cluster; and determining the abnormal virtual instance based on the first resource utilization information, the second resource utilization information, and the performance score of each virtual instance when the application service is implemented. The first resource utilization information is for determining resource utilization of the network device, and the second resource utilization information is for determining resource utilization of the virtual instance.

In another possible design manner, the first resource utilization information includes at least one of central processing unit (central processing unit, CPU) utilization, memory utilization, disk utilization, or a network delay of the network device. The second resource utilization information includes at least one of CPU utilization, memory utilization, disk utilization, or a network delay of the virtual instance.

Based on the possible design, in the method provided in this application, the abnormal virtual instance may be further determined by comprehensive evaluation based on the resource utilization of the network device and the virtual instance and the foregoing determined performance score. In this way, because the method comprehensively considers a plurality of factors, the accuracy of locating the abnormal virtual instance is further improved, that is, the probability of determining the abnormal virtual instance improperly is further reduced.

In another possible design manner, the virtual instance includes any one of a virtual machine instance or a container instance.

In another possible design manner, the node that implements the foregoing application service may include a load balancing node, an application server node, and a database node. Functions of the load balancing node, the application server node, and the database node are separately implemented by using different virtual instances.

According to a second aspect, this application provides a public cloud tenant service management apparatus. The apparatus is run on a cloud platform. The apparatus includes: a display unit, configured to provide a cloud service control interface; a determining unit, configured to determine a plurality of virtual instances purchased by a tenant through the cloud service control interface; and determine, in the plurality of virtual instances, an instance cluster of virtual instances for supporting a same application service; and the display unit, further configured to display a topological relationship diagram of the virtual instances in the instance cluster on the cloud service control interface.

In a possible design manner, the apparatus further includes an obtaining unit. The display unit is further configured to provide a topological relationship diagram display interface. The topological relationship diagram display interface is configured to receive a trigger command input by the tenant. The obtaining unit is configured to obtain topology information of the virtual instances in the instance cluster based on the trigger command. The display unit is configured to display the topological relationship diagram of the virtual instances in the instance cluster obtained based on the topology information on the cloud service control interface.

In another possible design manner, the topology information is determined based on packet header information of a connection establishment request acknowledgment packet for establishing connection communication when the connection communication is established between any two virtual instances in the plurality of virtual instances.

In another possible design manner, the obtaining unit is further configured to obtain performance information of each virtual instance in the instance cluster. The display unit is further configured to display the performance information of each virtual instance in the instance cluster in the foregoing topological relationship diagram.

In another possible design manner, for any virtual instance in the foregoing instance cluster, performance information of the any virtual instance is determined based on packet header information of a packet sent or received by the any virtual instance when the any virtual instance serves as a dependency server.

In another possible design manner, the packet header information includes a source address, a source port, a destination address, and a destination port of the packet. The foregoing packet header information may further include a control flag, a packet size, and a time stamp of a packet that includes the packet header information.

In another possible design manner, for any virtual instance in the foregoing instance cluster, the performance information of the any virtual instance includes: in a preset period, at least one of a packet exchange delay of the any virtual instance, a quantity of service requests received by the any virtual instance, or a quantity of service requests to which the any virtual instance does not respond.

In another possible design manner, the performance information of each virtual instance in the instance cluster is for determining a performance score of each virtual instance when the application service is implemented. The performance score of each virtual instance when the application service is implemented is for determining an abnormal virtual instance whose performance is abnormal.

The apparatus further includes: a marking unit, configured to mark the abnormal virtual instance in the instance cluster in the topological relationship diagram.

In another possible design manner, if a performance score higher than a threshold exists in the performance score of each virtual instance in the instance cluster when the application service is implemented, a virtual instance whose performance score is higher than the threshold is an abnormal virtual instance. If no performance score higher than a threshold exists in the performance score of each virtual instance in the instance cluster when the application service is implemented, no abnormal virtual instance exists in the instance cluster.

In another possible design manner, if performance of the virtual instances in the instance cluster when the application service is implemented is sorted in descending order, virtual instances whose performance ranks top m are abnormal virtual instances, and virtual instances whose performance ranks after the top m are normal virtual instances.

In another possible design manner, the obtaining unit is further configured to: obtain first resource utilization information of a network device of each virtual instance in the instance cluster; and obtain second resource utilization information of each virtual instance in the instance cluster. The determining unit is further configured to determine the abnormal virtual instance based on the first resource utilization information, the second resource utilization information, and the performance score of each virtual instance when the application service is implemented.

The first resource utilization information is for determining resource utilization of the network device, and the second resource utilization information is for determining resource utilization of the virtual instance.

In another possible design, the first resource utilization information includes at least one of central processing unit CPU utilization, memory utilization, disk utilization, or a network delay of the network device. The second resource utilization information includes at least one of CPU utilization, memory utilization, disk utilization, or a network delay of the virtual instance.

In another possible design manner, the virtual instance includes any one of a virtual machine instance or a container instance.

In another possible design manner, the node that implements the foregoing application service may include a load balancing node, an application server node, and a database node. Functions of the load balancing node, the application server node, and the database node are separately implemented by using different virtual instances.

It should be understood that the functional modules/units obtained through division may be integrated into one or more units/modules. For descriptions of possible technical solutions and beneficial effects performed by the functional modules/units obtained through division, refer to the technical solution provided in the first aspect or a corresponding possible design of the first aspect. Details are not described herein again.

According to a third aspect, embodiments of this application provide a public cloud tenant service management apparatus. The public cloud tenant service management apparatus includes: a memory and one or more processors, and the memory is coupled to the processor. The memory is configured to store computer instructions, and the processor is configured to invoke the computer instructions, to perform any method according to the first aspect and any possible design manner of the first aspect.

According to a fourth aspect, embodiments of this application provide a public cloud tenant service management system. The system includes any public cloud tenant service management apparatus provided in the second aspect and any possible design manner of the second aspect, and a plurality of agent modules. The plurality of agent modules are separately deployed in different network devices. For any agent module of the plurality of agent modules, the any agent module is configured to obtain at least one of topology information, performance information, a performance score, or resource utilization information of a virtual instance. The resource utilization information includes resource utilization information that is run on a network device in which the any agent module is deployed, and resource utilization information of a virtual instance that is run on the network device.

According to a fifth aspect, embodiments of this application provide a computer-readable storage medium, for example, a non-transitory computer-readable storage medium. A computer program (or instructions) is stored in a computer. When the computer program (or instructions) is run on the computer, the computer is enabled to perform any method provided in any possible implementation of the first aspect.

According to a sixth aspect, embodiments of this application provide a computer program product. When the computer program product is run on a computer, any method provided in any possible implementation of the first aspect is performed.

According to a seventh aspect, embodiments of this application provide a chip system, including: a processor. The processor is configured to invoke, from a memory, and run a computer program stored in the memory, to perform any method provided in the implementations of the first aspect.

It may be understood that any apparatus, computer storage medium, computer program product, chip system, or the like provided above may be used in the corresponding method provided above. Therefore, for beneficial effects that can be achieved, refer to beneficial effects of the corresponding method. Details are not described herein again.

In embodiments of this application, names of the foregoing public cloud tenant service management apparatus and the public cloud tenant service management system constitute no limitation on devices or functional modules. In an actual implementation, these devices or functional modules may appear with other names. As long as functions of the devices or functional modules are similar to those in embodiments of this application, the claims or equivalent technologies of the embodiments of this application fall within the scope of the claims or equivalent technologies of the embodiments of this application.

These aspects or other aspects of this application are more concise and understandable in the following description.

### BRIEF DESCRIPTION OF DRAWINGS

FIG. 1 is a schematic structural diagram of hardware of a management apparatus according to an embodiment of this application;
FIG. 2a is a schematic architectural diagram of a management system according to an embodiment of this application;
FIG. 2b is another schematic architectural diagram of a management system according to an embodiment of this application;
FIG. 3 is a schematic architectural diagram of a web application service according to an embodiment of this application;
FIG. 4 is a schematic flowchart of a public cloud tenant service management method according to an embodiment of this application;
FIG. 5 is a schematic diagram of establishing a TCP connection between a client and a server through a three-way handshake process;
FIG. 6 is a schematic diagram of a packet exchange delay of a virtual instance according to an embodiment of this application;
FIG. 7 is a schematic diagram of a packet exchange delay of another virtual instance according to an embodiment of this application;
FIG. 8 is a schematic diagram of a management apparatus receiving a trigger command of a tenant according to an embodiment of this application;
FIG. 9 is a topological relationship diagram generated by a management apparatus based on topology information according to an embodiment of this application;
FIG. 10 is a schematic diagram of displaying a topological relationship diagram according to an embodiment of this application;
FIG. 11 is another schematic diagram of displaying a topological relationship diagram according to an embodiment of this application;
FIG. 12a is still another schematic diagram of displaying a topological relationship diagram according to an embodiment of this application;
FIG. 12b is still another schematic diagram of displaying a topological relationship diagram according to an embodiment of this application;
FIG. 13 is a schematic structural diagram of a management apparatus according to an embodiment of this application;
FIG. 14 is a schematic structural diagram of a chip system according to an embodiment of this application; and
FIG. 15 is a schematic structural diagram of a computer program product according to an embodiment of this application.

### DESCRIPTION OF EMBODIMENTS

The term "exemplary" or "for example" in embodiments of this application means "used as an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner.

In embodiments of this application, the terms "first" and "second" are merely used for description purposes, and cannot be understood as indicating or implying relative importance, or implicitly indicating a quantity of indicated technical features. Therefore, features defined with a "first" and "second" may explicitly or implicitly include one or more of the features. In description of this application, unless otherwise stated, "a plurality of" means two or more.

The term "at least one" in this application means one or more, and the term "a plurality of" in this application means two or more. For example, a plurality of second packets means two or more second packets. The terms "system" and "network" are often used interchangeably herein.

It should be understood that the terms used in the description of the various examples herein are merely intended to describe specific examples and are not intended to be limiting. As used in the descriptions of the various examples and the appended claims, the terms "one" ("a" and "an") and "the" of singular forms are also intended to include plural forms, unless otherwise specified in the context clearly.

It should also be understood that the term "and/or" as used herein refers to and covers any and all possible combinations of one or more of the associated listed items. The term "and/or" is an association relationship that describes associated objects, and indicates that three relationships may exist. For example, A and/or B may indicate: Only A exists, both A and B exist, and only B exists. In addition, the character "/" in this application generally indicates that the associated objects are in an "or" relationship.

It should be further understood that sequence numbers of the processes do not mean execution sequences in various embodiments of this application. The execution sequences of the processes should be determined based on functions and internal logic of the processes, and should not be construed as any limitation on the implementation processes of embodiments of this application.

It should be understood that determining B based on A does not mean that B is determined only based on A, and B may also be determined based on A and/or other information.

It should further be understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their packets not excluded.

It should be further understood that the term "if" may be interpreted as a meaning of "when" ("when" or "upon"), "in response to determining", or "in response to detecting". Similarly, depending on the context, the phrase "if it is determined" or "if [the stated condition or event] is detected" may be interpreted as a meaning of "on the determination of" or "in response to the determination of" or "on the detection of [the stated condition or event]" or "in response to the detection of [the stated condition or event]".

It should be understood that "one embodiment", "an embodiment", and "one possible implementation" mentioned throughout the specification mean that a specific feature, structure, or feature related to the embodiment or implementation is included in at least one embodiment of this application. Therefore, "in one embodiment", "in an embodiment", or "a possible implementation" appearing throughout the specification may not necessarily refer to a same embodiment. In addition, these particular features, structures, or characteristics may be combined in one or more embodiments in any appropriate manner.

Embodiments of this application provide a public cloud tenant service management method. The method may be run on a cloud platform. Based on the method, in a plurality of virtual instances purchased by a tenant, an instance cluster of a plurality of virtual instances for supporting a same application service is determined based on a topological association relationship between the plurality of virtual instances. Further, based on the method provided in embodiments of this application, a topological relationship diagram indicating the topological association relationship between the virtual instances in the instance cluster may be displayed on a cloud service control interface.

A virtual instance having the topological association relationship is a virtual instance having a dependency relationship. In this way, a topological relationship of a virtual instance in an instance cluster is visualized, so that user experience when a tenant manages a plurality of virtual instances purchased by the tenant can be improved.

Embodiments of this application further provide a public cloud tenant service management apparatus. The public cloud tenant service management apparatus may be any computing apparatus that has a computing processing capability, and the public cloud tenant service management apparatus may be deployed on a cloud platform. For example, the apparatus is deployed on the cloud platform of the public cloud.

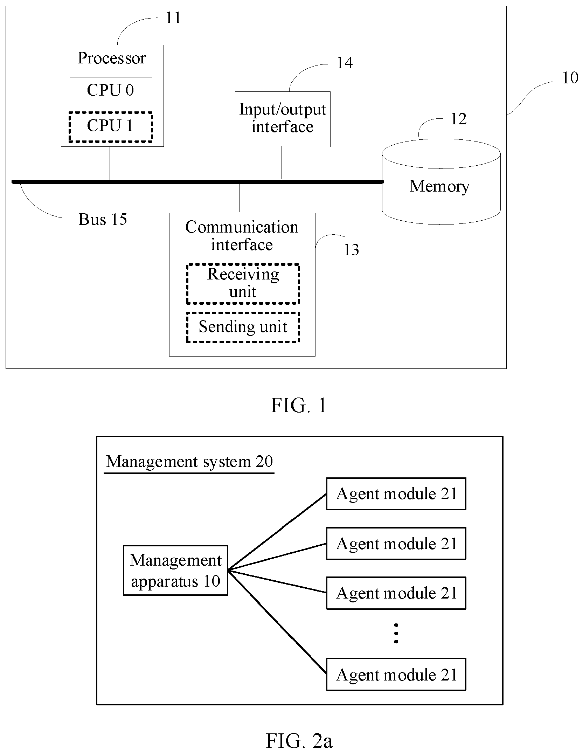

For brief description, the "public cloud tenant service management apparatus" is briefly referred to as a "management apparatus" in the following embodiments of this application. Refer to FIG. 1. FIG. 1 shows a schematic structural diagram of hardware of a management apparatus. As shown in FIG. 1, the management apparatus 10 includes a processor 11, a memory 12, a communication interface 13, an input/output interface 14, and a bus 15. The processor 11, the memory 12, the communication interface 13, and the input/output interface 14 may be connected by the bus 15.

The processor 11 is a control center of the management apparatus 10, and may be a general-purpose central processing unit (central processing unit, CPU), another general-purpose processor, or the like. The general-purpose processor may be a microprocessor, any conventional processor, or the like.

In an example, the processor 11 may include one or more CPUs, for example, a CPU 0 and a CPU 1 shown in FIG. 1.

The memory 12 may be a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a magnetic disk storage medium or another magnetic storage device, or any other medium capable of carrying or storing expected program code in a form of instructions or a data structure and capable of being accessed by a computer, but is not limited thereto.

In a possible implementation, the memory 12 may exist independently of the processor 11.

The memory 12 may be connected to the processor 11 by the bus 15, and is configured to store data, instructions, or program code. When invoking and executing the instructions or the program code stored in the memory 12, the processor 11 can implement the public cloud tenant service management method provided in the embodiments of this application.

In another possible implementation, the memory 12 may alternatively be integrated with the processor 11.

The communication interface 13 is configured to connect the management apparatus 10 to another device (such as an agent module or a database) via a communication network. The communication network may be an Ethernet, a radio access network (radio access network, RAN), a wireless local area network (wireless local area network, WLAN), or the like.

The communication interface 13 may include a receiving unit configured to receive data and a sending unit configured to send data.

The input/output interface 14 is configured to implement human-computer interaction between the management apparatus 10 and the tenant. The input/output interface 24 may be a device such as a mouse, a keyboard, and a display screen, and certainly is not limited thereto.

For example, the management apparatus 10 may display a topological relationship diagram or the like of a virtual instance in an instance cluster to a tenant via the input/output interface (for example, a display screen).

The bus 15 may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like.

For ease of representation, only one bold line is used to represent the bus in FIG. 1, but this does not mean that there is only one bus or only one type of bus.

It should be noted that a structure shown in FIG. 1 does not constitute a limitation on the management apparatus 10. In addition to the components shown in FIG. 1, the management apparatus 10 may include more or fewer components than those shown in the figure, or combine some components, or have different component arrangements.

Embodiments of this application further provide a public cloud tenant service management system. The public cloud tenant service management system includes the foregoing management apparatus and at least one agent module. For brief description, the "public cloud tenant service management system" is briefly referred to as a "management system" in the following embodiments of this application.

The agent module may be deployed in a network device, and one agent module may be deployed in one network device. The network device may be any physical node connected to the network, and the physical node may be, for example, a physical machine. One or more virtual instances may be run on one physical node, and the virtual instance may be a virtual machine service, a container service, or the like. Certainly, this is not limited thereto.

Specifically, the agent module may be configured to determine topology information of a virtual instance that is run on a network device in which the agent module is deployed. The topology information of the virtual instance includes an identification number of the virtual instance, an identification number of a virtual instance having a dependency relationship with the virtual instance, and the dependency relationship.

The agent module may be further configured to detect performance information of a virtual instance that is run on a network device in which the agent module is deployed and that serves as a dependency (dependency) server, and detect performance information of a virtual instance on which the virtual instance that is run on the network device depends. The agent module may then determine a performance score of the virtual instance based on detected performance information of the virtual instance.

The agent module may be further configured to detect first resource utilization information of a network device in which the agent module is deployed, and detect second resource utilization information of a virtual instance that is run on the network device.

For a process in which the agent module detects the performance information of the virtual instance, determines the performance score of the virtual instance based on the performance information of the virtual instance, and detects the first resource utilization information and the second resource utilization information, refer to the description in the following method. Details are not described herein again.

The management apparatus may connect and communicate with the at least one agent module, and obtain topology information of the virtual instance determined by the at least one agent module, performance information of the virtual instance detected by the at least one agent module and a performance score determined based on the performance information, and first resource utilization information and second resource utilization information detected by the at least one agent module.

In this way, the management apparatus may determine the instance cluster of virtual instances for supporting a same application service in the plurality of virtual instances purchased by the tenant based on the obtained topology information of the virtual instances, and display the topological relationship diagram of the instance cluster to the tenant through the cloud service control interface.

A plurality of virtual instances having a dependency relationship may form an instance cluster. For any instance cluster, the instance cluster is used to implement an application service, and different virtual instances in the instance cluster are used to execute different tasks or processes in the application service. For a detailed description of how the management apparatus determines the instance cluster, refer to the description of the following method. Details are not described herein again.

In addition, the management apparatus may further display the obtained performance information of the virtual instance in the instance cluster on the foregoing topological relationship diagram, to notify the tenant of the current performance status of the virtual instance.

Further, the management apparatus may further determine, in a global angle range based on the obtained performance score and resource utilization information of the virtual instance, an abnormal virtual instance whose performance is abnormal, and mark the abnormal virtual instance on the foregoing topological relationship diagram, to notify the tenant to process the abnormal virtual instance.

Refer to FIG. 2a. FIG. 2a shows a schematic architectural diagram of the foregoing management system. As shown in FIG. 2a, a management system 20 includes a management apparatus 10 and m agent modules 21.

The management apparatus 10 and the m agent modules 21 are directly connected and communicated. In this way, the management apparatus 10 may receive topology information, performance information, performance scores, and resource utilization information of virtual instances reported by the m agent modules, and further process the information.

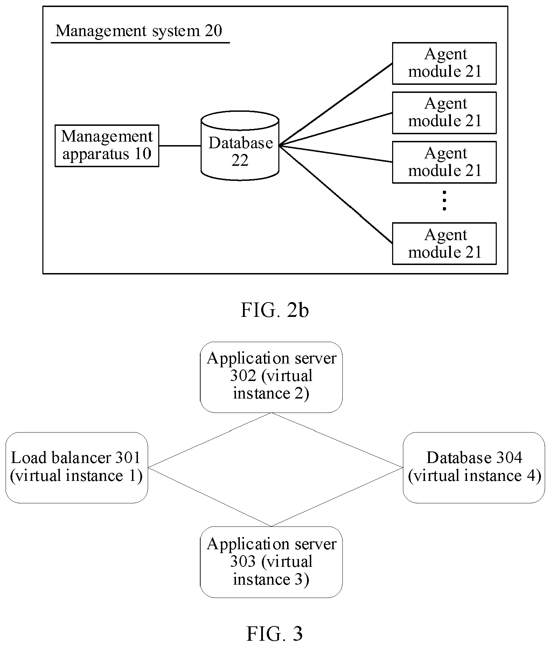

Refer to FIG. 2b. FIG. 2b is another schematic architectural diagram of the foregoing management system. As shown in FIG. 2b, the management system 20 includes a management apparatus 10, m agent modules 21, and a database 22.

The management apparatus 10 is connected and communicated with the database 22, and the m agent modules 21 are connected and communicated with the database 22.

In this way, the m agent modules may report the determined topology information, performance information, performance scores, and resource utilization information of the virtual instances to the database 22. Then, the management apparatus 10 may read the information from the database 22, and further process the read information.

It may be understood that the foregoing application service is not specifically limited in embodiments of this application. For example, the application service may be any one of application services such as a web (web) application service, a video application service, a shopping application service, a take-out application service, or a taxi application service. Certainly, this is not limited thereto.

It should be understood that the foregoing application service may implement functions of the application service by using a plurality of virtual instances.

For example, the foregoing application service is a web application service. Refer to FIG. 3. FIG. 3 shows an architectural diagram of a web application service.

As shown in FIG. 3, nodes that can implement the web application service may include: a load balancer 301, an application server 302, an application server 303, and a database 304. Functions of the load balancer 301, the application server 302, the application server 303, and the database 304 may be separately implemented by using different virtual instances.

For example, as shown in FIG. 3, the load balancer 301 may implement its functions by using a virtual instance 1, the application server 302 may implement its functions by using a virtual instance 2, the application server 303 may implement its functions by using a virtual instance 3, and the database 304 may implement its functions by using a virtual instance 4.

In this way, the service provided by the web application service may be implemented by using the virtual instance 1, the virtual instance 2, the virtual instance 3, and the virtual instance 4 that have corresponding dependency relationships. That is, the virtual instance 1, the virtual instance 2, the virtual instance 3, and the virtual instance 4 constitute an instance cluster of the web application service.

The virtual instance 1, the virtual instance 2, the virtual instance 3, and the virtual instance 4 may be virtual instances that are run on a same network device, or may be virtual instances that are run on different network devices. This is not limited in embodiments of this application.

If the virtual instance 1, the virtual instance 2, the virtual instance 3, and the virtual instance 4 in FIG. 3 are virtual instances that are run on different network devices, when the topological relationship diagrams of the virtual instance 1, the virtual instance 2, the virtual instance 3, and the virtual instance 4 are obtained by using the method provided in embodiments of this application, an agent module 1 needs to be deployed in the network device for running the virtual instance 1, an agent module 2 needs to be deployed in the network device for running the virtual instance 2, an agent module 3 needs to be deployed in the network device for running the virtual instance 3, and an agent module 4 needs to be deployed in the network device for running the virtual instance 4.

In this way, based on the topology information, performance information, performance score, and resource utilization information of each virtual instance respectively reported by the agent module 1, the agent module 2, the agent module 3, and the agent module 4, the management apparatus may determine the topological relationship diagrams of the virtual instance 1, the virtual instance 2, the virtual instance 3, and the virtual instance 4, and detect an abnormal virtual instance whose performance is abnormal.

It may be understood that the agent module 1, the agent module 2, the agent module 3, and the agent module 4 herein may be the agent module described in FIG. 2a or FIG. 2b, and the management apparatus may be the management apparatus described in FIG. 2a or FIG. 2b.

For a process in which the agent module obtains and reports the topology information, performance information, performance score, and resource utilization information of the virtual instance, and the management apparatus further processes the information, refer to the description of the following method. Details are not described herein again.

The following describes a public cloud tenant service management method provided in embodiments of this application with reference to the accompanying drawings.

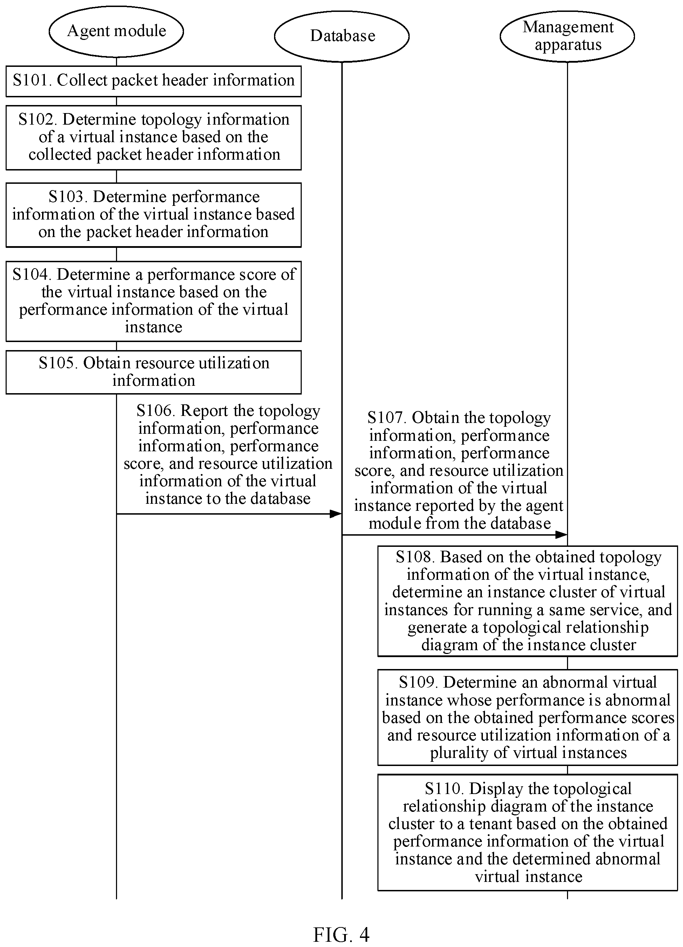

Refer to FIG. 4. FIG. 4 shows a schematic flowchart of a public cloud tenant service management method according to an embodiment of this application. The method may be applied to the management system shown in FIG. 3 or FIG. 4. For clear description, an example in which the method is applied to the management system shown in FIG. 4 is used below for description.

The method may include the following steps:
S101. An agent module collects packet header information.

The agent module may be any agent module 21 in the management system 40 shown in FIG. 4, and this is not limited.

Specifically, the agent module may collect packet header information of a to-be-sent or received service packet from a network interface card (network interface card, NIC) receiving and sending queue of a network device in which the agent module is deployed.

One or more virtual instances are run on the network device, and each of the one or more virtual instances sends or receives a service packet by using the NIC of the network device. In this way, packet header information of the to-be-sent or received service packet collected from the NIC receiving and sending queue of the network device by the agent module is packet header information of the service packet sent or received by the one or more virtual instances that are run on the network device.

The packet header information includes an internet protocol header (internet protocol header, IP header) and a transmission control protocol header (transmission control protocol header, TCP header) of the service packet.

The IP header includes a source IP address (source IP address), a destination IP address (destination IP address), and a packet length (IP packet length) of the service packet.

The TCP header includes a source port (source port), a destination port (destination port), and control flags (control flags) of the service packet.

For brief description, in embodiments of this application, the destination address and the destination port are collectively referred to as destination address information, and the source address and the source port are collectively referred to as source address information below.

It should be understood that the destination address information identifies a virtual instance that receives the service packet, and the source address information identifies a virtual instance that sends the service packet. The foregoing packet size is used to identify a payload (payload) size of the service packet. When the packet size is 0, it indicates that the payload of the service packet is empty. The foregoing control flag is used to identify a type of the service packet. For example, if the control flag is an ack flag, it indicates that the service packet is a service acknowledgment packet.

For example, when the virtual instance uses a TCP/IP communication model, the agent module collects first 64 bytes of the TCP packet, where content of the 64 bytes includes destination address information, source address information, and the like of the TCP packet. That is, information such as a destination address, a destination port, a source address, a source port, a packet size, and control flags of the TCP packet is included.

In addition, the agent module further collects a time stamp of the to-be-sent or received service packet in the NIC receiving and sending queue, where the time stamp is used to identify a specific time at which the service packet is sent or received.

It can be learned that in the method provided in embodiments of this application, the agent module collects only packet header information of the service packet, and the packet header information may be used to subsequently determine information such as topology information and performance information of the virtual instance. It can be learned that, when the information such as the topology information and the performance information of the virtual instance is determined by using the method, data information of a user is not involved, thereby fully ensuring data security of the user, that is, ensuring privacy security of the user data.

S 102. The agent module determines topology information of the virtual instance based on the collected packet header information.

The topology information of the virtual instance includes an identification number of the virtual instance, an identification number of a virtual instance having a dependency relationship with the virtual instance, and the dependency relationship. The identification number of the virtual instance is used to uniquely identify the virtual instance.

Specifically, the agent module may determine two virtual instances that have a dependency relationship based on the control flag in the collected packet header information. In this way, the agent module may determine the topology information of the virtual instances.

For example, the network device in which the agent module is deployed is a first network device. Optionally, when the packet header information collected by the agent module is packet header information of a to-be-sent service packet in an NIC sending queue of the first network device. In addition, when the agent module determines that the packet header information is packet header information of a connection request acknowledgment packet based on the control flag in the collected packet header information, the agent module determines a virtual instance identified by the destination address information in the packet header information as a local (local) server, and determines a virtual instance identified by the source address information in the packet header information as a dependency (dependency) server.

It should be understood that, when a TCP connection is established, the TCP connection usually needs to be established by using a three-way handshake process.

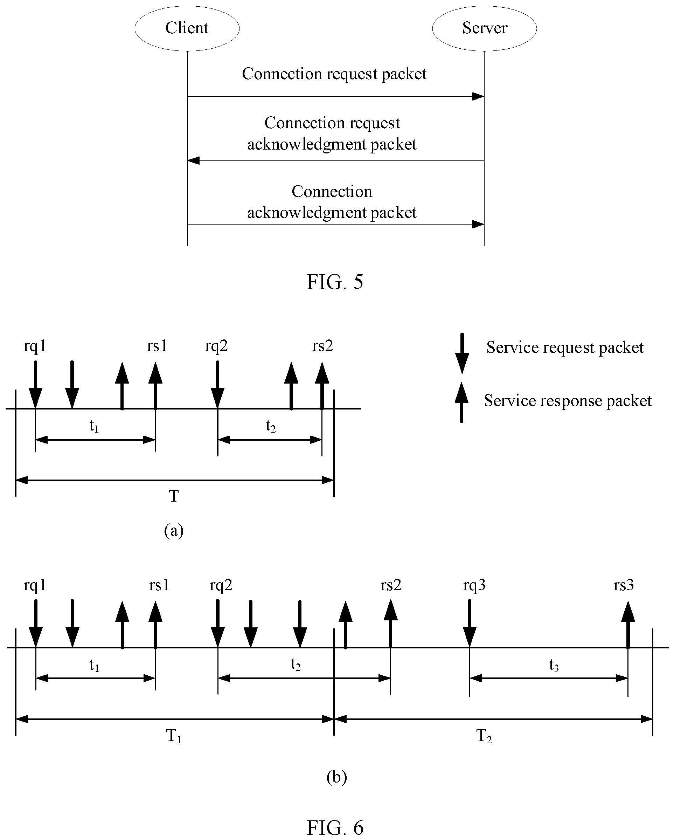

An example in which a client requests to establish a TCP connection with a server is used. Refer to FIG. 5. FIG. 5 shows a schematic diagram of establishing a TCP connection between a client and a server through a three-way handshake process.

As shown in FIG. 5, the client first sends a connection request packet to the server, where control flags in the connection request packet include a syn flag.

Then, after receiving the connection request packet, if the server agrees to establish the TCP connection, the server sends a connection request acknowledgment packet to the client. The control flags in the connection request acknowledgment packet include the syn flag and an ack flag.

Then, after receiving the connection request acknowledgment packet, the client determines that the server has agreed to establish the TCP connection with the client. In this case, the client sends a connection acknowledgment packet to the server. The control flags in the connection acknowledgment packet include the ack flag.

When the server receives the connection acknowledgment packet, the TCP connection between the client and the server is successfully established. In this way, the client may send a service request packet to the server through the TCP connection, receive a service request response packet sent by the server through the TCP connection, and the like.

It should be understood that a plurality of TCP connections may be established between one client and one server.

In this case, when the control flags in the packet header information collected by the agent module from the NIC sending queue of the first network device include the syn flag and the ack flag, the agent module determines that the service packet including the packet header information is a connection request acknowledgment packet when the TCP connection is established between two virtual instances.

Then, the agent module may determine a virtual instance identified by the destination address information in the packet header information as a local server, and determine a virtual instance identified by the source address information in the packet header information as a dependency server.

The virtual instance that serves as the local server depends on the virtual instance that serves as the dependency server. In other words, the virtual instance that serves as the dependency server is a dependency of the virtual instance that serves as the local server.

It should be understood that the virtual instance that serves as the local server needs to be used as the virtual instance that serves as the dependency server to provide a service, that is, the virtual instance that serves as the dependency server provides the service for the virtual instance that serves as the local server.

For example, when the packet header information collected by the agent module is packet header information of a to-be-sent service packet in the NIC sending queue of the network device 1. In addition, when control flags in the packet header information include a sny flag and an ack flag, in this case, the agent module determines a virtual instance 0 identified by the destination address information in the packet header information as a local (local) server, and determines a virtual instance 1 identified by the source address information in the packet header information as a dependency server. That is, the virtual instance 0 depends on the virtual instance 1.

Optionally, when the packet header information collected by the agent module is packet header information of a service packet received by an NIC receiving queue of the first network device. In addition, when the agent module determines that the packet header information is packet header information of a connection request acknowledgment packet based on the control flag in the collected packet header information, the agent module determines a virtual instance identified by the destination address information in the packet header information as a local (local) server, and determines a virtual instance identified by the source address information in the packet header information as a dependency (dependency) server.

For a specific process in which the agent module determines that the packet header information is packet header information of the connection request acknowledgment packet based on the control flag in the collected packet header information, reference may be made to the foregoing description. Details are not described herein again.

For example, when the packet header information collected by the agent module is packet header information of a service packet received by the NIC receiving queue of the network device 1. In addition, when control flags in the packet header information include a sny flag and an ack flag, in this case, the agent module determines a virtual instance 1 identified by the destination address information in the packet header information as a local server, and determines a virtual instance 2 identified by the source address information in the packet header information as a dependency server. That is, the virtual instance 1 depends on the virtual instance 2.

Then, the agent module may determine topology information of the virtual instance based on a determined virtual instance having a dependency relationship.

Optionally, the agent module may add determined topology information to a topological relationship set. It should be understood that the topological relationship set is configured in the agent module.

The topological relationship set includes topology information of a plurality of virtual instances. It should be understood that, for any virtual instance in the plurality of virtual instances, topology information of the any virtual instance includes an identification number of the any virtual instance, an identification number of a virtual instance that has a dependency relationship with the any virtual instance, and the dependency relationship.

For example, when the topological relationship set preset in the agent module is implemented in a form of a topological relationship table, and different columns in the topological relationship table may be used to reflect a dependency relationship between virtual instances, then when the agent module determines that the virtual instance 0 depends on the virtual instance 1, and the virtual instance 1 depends on the virtual instance 2, the virtual instance 0, the virtual instance 1, and the virtual instance 2 are added to the topological relationship table shown in Table 1:

**Table 1**

| Local server | Dependency server |
|---|---|
| Virtual instance 0 | Virtual instance 1 |
| Virtual instance 1 | Virtual instance 2 |
| ... | ... |

It should be understood that the topological relationship set configured in the agent module may be a topological relationship set established after the agent module collects the packet header information of the connection request acknowledgment packet for the first time, or may be a topological relationship set obtained by the agent module in advance. This is not limited in embodiments of this application.

S103. The agent module determines performance information of the virtual instance based on the packet header information.

When a value of a packet size in the packet header information obtained by the agent module is not 0, and it indicates that a payload of the service packet including the packet header information is not empty, the agent module determines the performance information of the virtual instance that serves as the dependency server based on the packet header information.

The service packet whose payload is not empty is usually referred to as a data packet.

It should be understood that the performance information of the virtual instance that serves as the dependency server may be used to represent performance of the virtual instance that serves as the dependency server providing a service for another virtual instance.

For any virtual instance in the virtual instances that function as dependency servers, performance information of the any virtual instance may include: in a preset period, at least one of a packet exchange delay of the any virtual instance, a quantity of service requests received by the any virtual instance, or a quantity of service requests to which the any virtual instance does not respond. The preset period may be a sampling period in which the agent module collects the packet header information.

The packet exchange delay of the any virtual instance in the preset period is a packet exchange delay corresponding to a packet exchange process implemented by the any virtual instance in the preset period. The packet exchange delay corresponding to the packet exchange process refers to a time difference between a moment at which the any virtual instance receives a first service request packet and a moment at which the any virtual instance consecutively sends a last service response packet in service response packets for the first time after the first service request packet is received.

It should be understood that one packet exchange process corresponds to one packet exchange delay.

When the any virtual instance implements a plurality of packet exchange processes in a preset period, a packet exchange delay of the any virtual instance in the preset period is an average packet exchange delay of a plurality of packet exchange delays corresponding to the plurality of packet exchange processes.

The agent module may determine a specific moment of receiving or sending a packet including the packet header information based on a time stamp in the collected packet header information. In this way, an exchange delay of the any virtual instance may be determined based on the moment at which the any virtual instance receives the first service request packet and the moment at which the last service response packet in the service response packets that are consecutively sent for the first time after the first service request packet is received.

For how the agent module determines whether the packet including the packet header information is a service request packet or a service response packet based on the collected packet header information, refer to the following description. Details are not described herein again.

For example, refer to FIG. 6. FIG. 6 shows a schematic diagram of a packet exchange delay of a virtual instance.

For example, the virtual instance is a VM 1. As shown in (a) in FIG. 6, in a preset period T, rq1 is the first service request packet received by the VM 1, and rs1 is the last service response packet in the service response packets that are consecutively sent for the first time by the VM 1 after the service request packet rq1 is received. rq2 is a service request packet that is first received by the VM 1 after the service response packet rs1 is sent, and rs2 is a last service response packet in service response packets that are consecutively sent for the first time in the preset period T after the VM 1 receives the service request packet rq2.

In this way, the VM 1 implements two service packet exchange processes in the preset period T, and the two service packet exchange processes include a first exchange process: after receiving the service request packet rq1, the VM 1 processes the service request packet, and then sends the service response packet rs1 of the service request packet rq1. As shown in (a) in FIG. 6, an exchange time of the exchange process is t₁, where t₁ is a difference value between a time point 1 indicated by a time stamp in packet header information of a service request packet rq1 and a time point 2 indicated by a time stamp in packet header information of a service response packet rs1.

The foregoing two service packet exchange processes further include a second exchange process: after receiving the service request packet rq2, the VM 1 processes the service request packet, and then sends the service response packet rs2 of the service request packet rq2. As shown in (a) in FIG. 6, an exchange time of the exchange process is t₂, where t₂ is a time difference between a time point 3 indicated by a time stamp in packet header information of a service request packet rq2 and a time point 4 indicated by a time stamp in packet header information of a service response packet rs2.

Therefore, the packet exchange delay of the VM 1 in the preset period T is an average exchange time of two service packet exchange processes implemented by the VM 1 in the preset period T, that is, the packet exchange delay of the VM 1 is [(t₁+t₂)/2].

As shown in (b) in FIG. 6, in a first preset period T₁, rq1 is a first service request packet received by the VM 1, and rs1 is a last service response packet in service response packets that are consecutively sent by the VM 1 for the first time after the service request packet rq1 is received. rq2 is a service request packet that is first received by the VM 1 after the service response packet rs1 is sent.

In a second preset period T₂, rs2 is a last service response packet in service response packets that are consecutively sent by the VM 1 for the first time, and rq3 is a service request packet that is first received by the VM 1 after the service response packet rs2 is sent. rs3 is a last service response packet in service response packets that are consecutively sent by the VM 1 for the first time in the preset period T₂ after the service request packet rq3 is received.

In this way, the VM 1 implements one service packet exchange process in the preset period T₁, and the service packet exchange process is as follows: after receiving the service request packet rq1, the VM 1 processes the service request packet, and then sends the service response packet rs1 of the service request packet rq1. As shown in (b) in FIG. 6, an exchange time of the exchange process is t₁, where t₁ is a time difference between a time point 1 indicated by a time stamp in packet header information of a service request packet rq1 and a time point 2 indicated by a time stamp in packet header information of a service response packet rs1.

In a cross-domain preset period T₁ and preset period T₂, the VM 1 further implements one service packet exchange process, and the service packet exchange process is as follows: After receiving the service request packet rq2 in the preset period T₁, the VM 1 processes the service request packet, and then sends the service response packet rs2 of the service request packet rq2 in the preset period T₂. As shown in (b) in FIG. 6, an exchange time of the exchange process is t₂, where t₂ is a time difference between a time point 3 indicated by a time stamp in packet header information in a service request packet rq2 and a time point 4 indicated by a time stamp in packet header information in a service response packet rs2.

The VM 1 implements one service packet exchange process in the preset period T₂, and the service packet exchange process is as follows: after receiving the service request packet rq3, the VM 1 processes the service request packet, and then sends the service response packet rs3 of the service request packet rq3. As shown in (b) in FIG. 6, an exchange time of the exchange process is t₃, and t₃ is a time difference between a time point 5 indicated by a time stamp in packet header information in a service request packet rq3 and a time point 6 indicated by a time stamp in packet header information in a service response packet rs3.

Therefore, in a possible case, the packet exchange delay of the VM 1 in the preset period T₁ may be an average exchange time of two service packet exchange processes implemented by the VM 1 in the preset period T₁ and across the preset period T₁ and the preset period T₂. That is, the packet exchange delay of the VM 1 in the preset period T₁ is [(t₁+t₂)/2].

In this case, the packet exchange delay of the VM 1 in the preset period T₂ may be an exchange time of one service packet exchange process implemented by the VM 1 in the preset period T₂. That is, the packet exchange delay of the VM 1 in the preset period T₂ is t₃.

In another possible case, the packet exchange delay of the VM 1 in the preset period T₁ may be an exchange time of one service packet exchange process implemented by the VM 1 in the preset period T₁. That is, the packet exchange delay of the VM 1 in the preset period T₁ is t₁.

In this case, the packet exchange delay of the VM 1 in the preset period T₂ may be an average exchange time of two service packet exchange processes implemented by the VM 1 in the preset period T₂ and across the preset period T₁ and the preset period T₂. That is, the packet exchange delay of the VM 1 in the preset period T₂ is [(t₂+t₃)/2].

For clear description, in embodiments of this application, in the following, an exchange delay corresponding to a packet exchange process that spans two preset periods is used to determine a packet exchange delay of a virtual instance in a later preset period of the two preset periods.

Further, if any of the foregoing virtual instances simultaneously performs a packet exchange with another virtual instance via a plurality of TCP connections, a packet exchange delay of the any virtual instance in a preset period is an average packet exchange delay corresponding to a plurality of packet exchange processes implemented by the any virtual instance via the plurality of TCP connections in the preset period.

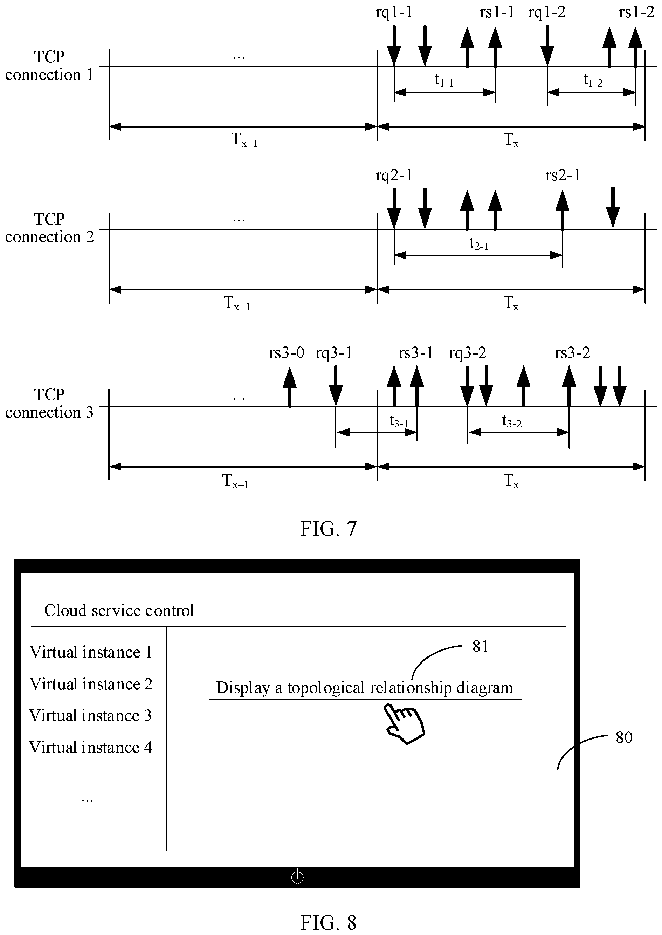

For example, refer to FIG. 7. FIG. 7 is a schematic diagram of a packet exchange delay of another virtual instance.

For example, the virtual instance is a VM 1. As shown in FIG. 7, the VM 1 exchanges packets with another virtual instance via three TCP connections. The three TCP connections include a TCP connection 1, a TCP connection 2, and a TCP connection 3.

For the TCP connection 1, in an x^{th} preset period Tₓ, rq1-1 is a first service request packet received by the VM 1, and rs1-1 is a last service response packet in service response packets that are consecutively sent by the VM 1 for the first time after the service request packet rq1-1 is received. rq1-2 is a first service request packet received by the VM 1 after the service response packet rs1-1 is sent, and rs1-2 is a last service response packet in service response packets that are consecutively sent by the VM 1 for the first time in the preset period Tₓ after the service request packet rq1-2 is received.

In this way, as shown in FIG. 7, the VM 1 implements two packet exchange processes via the TCP connection 1 in the preset period Tₓ, and exchange times of the two packet exchange processes are respectively t₁₋₁ and t₁₋₂.

For the TCP connection 2, in the x^{th} preset period Tₓ, rq2-1 is a first service request packet received by the VM 1, and rs2-1 is a last service response packet in service response packets that are consecutively sent by the VM 1 for the first time in the preset period Tₓ after the service request packet rq2-1 is received.

In this way, as shown in FIG. 7, the VM 1 implements one packet exchange process via the TCP connection 2 in the preset period Tₓ, and an exchange time of the packet exchange process is respectively t₂₋₁.

For the TCP connection 3, in an (x-1)^{th} preset period Tₓ₋₁, rq3-1 is a first service request packet sent by the VM 1 after a last service response packet rs3-0 is sent. In the x^{th} preset period Tₓ, rs3-1 is a last service response packet in service response packets that are consecutively sent by the VM 1 for the first time, and rq3-2 is a first service request packet received by the VM 1 after the service response packet rs3-1 is sent. rs3-2 is a last service response packet in service response packets that are consecutively sent by the VM 1 for the first time in the preset period Tₓ after the service request packet rq3-2 is received.

In this way, as shown in FIG. 7, the VM 3 implements two packet exchange processes via the TCP connection 3 in the preset period Tₓ, and exchange times of the two packet exchange processes are respectively t₃₋₁ and t₃₋₂.

In this case, an average packet exchange delay corresponding to packet exchange processes implemented by the VM 1 in the preset period Tₓ via the three TCP connections is: [t₁₋₁+t₁₋₂+t₂₋₁+t₃₋₁+t₃₋₂]/4.

In addition, the agent module further collects statistics on a quantity of service requests received by the any virtual instance in a preset period, and collects statistics on a quantity of service responses sent by the any virtual instance in the preset period.

In this way, based on the collected quantity of service requests and the collected quantity of service responses, the agent module may determine a quantity of service requests to which the any virtual instance does not respond in the preset period.

It should be understood that the quantity of unresponded service requests is a difference between a quantity of service requests and a quantity of service responses that are collected by the agent module in the preset period.

The agent module determines a first service request packet received by the any virtual instance in the preset period as a service request, and determines the first service request packet received after the any virtual instance sends the service response packet in the preset period as a service request. In this way, the agent module can collect statistics on a quantity of service requests received by the any virtual instance in the preset period.

In addition, the agent module further determines a last service response packet sent by the any virtual instance in the preset period as a service response, and determines a last service response packet sent before the any virtual instance receives the service request packet in the preset period as a service response. In this way, the agent module can collect statistics on a quantity of service responses sent by the any virtual instance in the preset period.

In this way, based on the quantity of service requests and the quantity of service responses that are collected by the agent module in the preset period, the agent module determines a quantity of service requests that are not responded by any of the foregoing virtual instances in the preset period.

For example, with reference to FIG. 6, as shown in (a) in FIG. 6, in a preset period T, the agent module collects statistics on a quantity of service requests received by the VM 1 as 2, and collects statistics on a quantity of service responses sent by the VM 1 as 2.

As shown in (b) in FIG. 6, in a preset period T1, the agent module collects statistics on a quantity of service requests received by the VM 1 as 2, and collects statistics on a quantity of service responses sent by the VM 1 as 2. In a preset period T2, the agent module collects statistics on a quantity of service requests received by the VM 1 as 1, and collects statistics on a quantity of service responses sent by the VM 1 as 2.

Certainly, if any of the foregoing virtual instances performs a packet exchange with another virtual instance via a plurality of TCP connections, a quantity of received service requests and service responses that are collected by the agent module in the preset period is a quantity of all service requests and service responses when the any virtual instance performs the packet exchange via the plurality of TCP connections.

In this way, a quantity of service requests determined by the agent module that are not responded by the any virtual instance is a quantity of all unresponded service requests when the any virtual instance performs the packet exchange via the plurality of TCP connections. A specific statistical process of the agent module is not described herein again.

The following describes a process in which the agent module determines whether a packet including the packet header information is a service request packet or a service response packet based on the collected packet header information.

Specifically, the agent module may determine whether a virtual instance identified by the destination address information in the collected packet header information is a local server or a dependency server and determine whether a virtual instance identified by the source address information in the collected packet header information is a local server or a dependency server based on the foregoing topological relationship set. In this way, the agent module may determine the virtual instance that serves as the dependency server and that is indicated in the packet header information.

For example, if the virtual instance identified by the destination address information in the packet header information collected by the agent module is a virtual instance 1, and the virtual instance identified by the source address information is a virtual instance 2, the agent module may determine the virtual instance 1 as a local server, and determine the virtual instance 2 as a dependency server based on the topological relationship table shown in table 1.

In this way, the agent module may determine the virtual instance identified by the source address information in the packet header information, that is, the virtual instance 2 is a virtual instance that serves as a dependency server.

Then, the agent module may determine whether a virtual instance that serves as a dependency server and that is indicated by address information in packet header information collected by the agent module is a virtual instance run by a first network device based on preset internet protocol (internet protocol, IP) addresses and port numbers of all virtual instances that are run on the first network device.

When the address information used to indicate the virtual instance that serves as the dependency server is address information of the virtual instance that is run on the first network device, it indicates that the virtual instance that serves as the dependency server is a virtual instance that is run on the first network device.

It should be understood that the IP addresses and the port numbers of all the virtual instances that are run on the first network device are preset in the agent module.

For example, when the IP addresses and the port numbers of the virtual instances that are run on the first network device include (IP 1, port 1) and (IP 2, port 2), if the address information of the virtual instance that serves as the dependency server and that is indicated by the packet header information collected by the agent module is (IP 1, port 1), the agent module determines that the virtual instance that serves as the dependency server and that is indicated by the address information in the packet header information is a virtual instance run by the first network device.

If the address information of the virtual instance that serves as the dependency server and that is indicated by the packet header information collected by the agent module is (IP 0, port 0), the agent module determines that the virtual instance that serves as a dependency and that is indicated by the address information in the packet header information is not a virtual instance run by the first network device.

In this case, if the agent module determines that the virtual instance that serves as the dependency server and that is indicated by the address information in the collected packet header information is a virtual instance run by the first network device, and the address information is destination address information in the packet header information, the agent module determines that a packet including the packet header information is a service request packet received by the virtual instance that serves as the dependency server.

For example, if the agent module determines that the virtual instance 1 that serves as the dependency server and that is indicated by the address information in the collected packet header information 1 is a virtual instance run by the first network device, and the address information for identifying the virtual instance 1 is destination address information in the packet header information 1, the agent module determines that a packet including the packet header information 1 is a service request packet received by the virtual instance 1 that is run on the first network device.

If the agent module determines that the virtual instance that serves as the dependency server and that is indicated by the address information in the collected packet header information is a virtual instance run by the first network device, and the address information is source address information, the agent module determines that the packet including the packet header information is a service response packet to be sent by the virtual instance that serves as the dependency server.

For example, if the agent module determines that the virtual instance 1 that serves as the dependency server and that is indicated by the address information in the collected packet header information 1 is a virtual instance run by the first network device, and the address information for identifying the virtual instance 1 is source address information in the packet header information 1, the agent module determines that the packet including the packet header information 1 is a service response packet to be sent by the virtual instance 1 that is run on the first network device.

If the agent module determines that the virtual instance that serves as the dependency server and that is indicated by the address information in the collected packet header information is not a virtual instance run by the first network device, and the address information is destination address information, the agent module determines that the packet including the packet header information is a service request packet sent by the virtual instance run by the first network device to the virtual instance that serves as the dependency server, that is, the packet is a service request packet received by the virtual instance that serves as the dependency server.

For example, if the agent module determines that the virtual instance 1 that serves as the dependency server and that is indicated by the address information in the collected packet header information 1 is not a virtual instance run by the first network device, and the address information for identifying the virtual instance 1 is destination address information in the packet header information 1, the agent module determines that the packet including the packet header information 1 is a service request packet sent by the virtual instance run by the first network device to the virtual instance 1 that serves as the dependency server, that is, the packet is a service request packet received by the virtual instance 1 that serves as the dependency server.

If the agent module determines that the virtual instance that serves as the dependency server and that is indicated by the address information in the collected packet header information is not a virtual instance run by the first network device, and the address information is source address information, the agent module determines that the packet including the packet header information is a service response packet that is received by the virtual instance run by the first network device from the virtual instance that serves as the dependency server, that is, the packet is a service response packet sent by the virtual instance that serves as the dependency server.

For example, if the agent module determines that the virtual instance 1 that serves as the dependency server and that is indicated by the address information in the collected packet header information 1 is not a virtual instance run by the first network device, and the address information for identifying the virtual instance 1 is source address information in the packet header information 1, the agent module determines that the packet including the packet header information 1 is a service response packet that is received by the virtual instance run by the first network device from the virtual instance 1 that serves as the dependency server, that is, the packet is a service response packet sent by the virtual instance 1 that serves as the dependency server.

Optionally, the agent module may record, in the topological relationship set, performance information of the virtual instance that serves as the dependency server and that is determined based on the collected packet header information.

For example, with reference to table 1, if the virtual instance 1 is a virtual instance that is run on the first network device, the virtual instance 0 and the virtual instance 1 are virtual instances that are run on another network device. Therefore, the agent module deployed in the first network device may detect, by using the method described above, performance information of the virtual instance 1 that serves as the dependency server of the virtual instance 0, and may detect performance information of the virtual instance 2 that serves as the dependency server of the virtual instance 1.

Details are shown in table 2:

**Table 2**

| Local server | Dependency server | Performance information of the dependency server |
|---|---|---|
| Virtual instance 0 | Virtual instance 1 | Exchange delay t₁, a quantity of service requests n₁₋₁, a quantity of unresponded service requests n₁₋₂ |
| Virtual instance 1 | Virtual instance 2 | Exchange delay t₂, a quantity of service requests n₂₋₁, a quantity of unresponded service requests n₂₋₂ |

It can be learned from the foregoing description that the virtual instance that serves as the dependency server may be a virtual instance that is run on the first network device, or may be a virtual instance that is run on another network device and that connects and communicates with the virtual instance that is run on the first network device via the TCP connection.

Therefore, it can be learned that the agent module deployed on the first network device may not only obtain performance information of the virtual instance that serves as the dependency server and that is run on the first network device, but also obtain performance information of the virtual instance that serves as the dependency server and that is run on another network device based on the collected packet header information. That is, the agent module deployed on the first network device may not only detect the performance information of the virtual instance that is run on the first network device, but also detect the performance information of the virtual instance that is run on another network device.

It can be further learned from the foregoing description that, in the method provided in embodiments of this application, the agent module determines, based only on the packet header information of the data packet whose payload is not empty, the performance information of the virtual instance that serves as the dependency server. This is because a service packet with an empty payload is usually a control packet (for example, a link probe packet), and the control packet is usually used only for traffic control on a link, that is, the control packet is usually irrelevant to a service provided by a virtual instance.

Therefore, in the method provided in embodiments of this application, only a packet header of a data packet is analyzed, to save resources and improve resource utilization.

S 104. The agent module determines a performance score of the virtual instance based on the performance information of the virtual instance.

Specifically, after detecting the performance information of the virtual instance that serves as the dependency server and that is run on the first network device, the agent module may vote for the virtual instance based on the performance information and a preset rule corresponding to the performance information, to obtain the performance score of the virtual instance.

The performance information and the preset rule corresponding to the performance information are used by the agent module to evaluate performance of the virtual instance, to determine whether the performance of the virtual instance is normal or abnormal.

When the performance information of the virtual instance includes the packet exchange delay of the virtual instance, the preset rule corresponding to the performance information may be: The packet exchange delay of the virtual instance in the preset period is less than a first preset threshold. A value of the first preset threshold is not specifically limited herein in embodiments of this application.

When the performance information of the virtual instance includes a quantity of service requests to which the virtual instance does not respond, the preset rule corresponding to the performance information may be: A quantity of service requests to which the virtual instance does not respond in the preset period is less than a second preset threshold, or a quantity of service requests to which the virtual instance does not respond in the preset period is greater than a second preset threshold, and a quantity of received service requests is greater than a third preset threshold. Values of the second preset threshold and the third preset threshold are not specifically limited herein in embodiments of this application.

It should be understood that the performance information of the virtual instance and the preset rule corresponding to the performance information are merely examples for description.

In this way, when the agent module determines that the detected performance information of the virtual instance that serves as the dependency server and that is on the first network device does not meet the preset rule corresponding to the performance information, that is, the agent module may determine that the performance of the virtual instance is abnormal. In this case, the agent module casts an abnormal vote for the virtual instance.

When the agent module determines that the detected performance information of the virtual instance that serves as the dependency server and that is run on the first network device meets the preset rule corresponding to the performance information, that is, the agent module may determine that the performance of the virtual instance is normal. In this case, the agent module does not process the virtual instance.

For example, when determining that the performance of the virtual instance is abnormal, the agent module casts a score of 1 for the virtual instance. The score of 1 indicates that the agent module casts an abnormal vote for the virtual instance. When the agent module determines that the performance of the virtual instance is normal, no processing is performed.

Further, after the agent module casts the abnormal vote for the virtual instance (for example, a first virtual instance) that serves as the dependency server and that is run on the first network device, the agent module further votes for a second virtual instance based on the detected performance information of the second virtual instance on which the first virtual instance depends, and the preset rule corresponding to the performance information.

Specifically, for the first virtual instance that serves as the dependency server and that is run on the first network device, the agent module may determine that the dependency of the first virtual instance is the second virtual instance based on the foregoing topological relationship set.

It should be understood that the second virtual instance may be a virtual instance that is run on any network device other than the first network device.

In this way, after the agent module casts the abnormal vote for the first virtual instance, the agent module further votes for the second virtual instance based on the detected performance information of the second virtual instance and the preset rule corresponding to the performance information.

When the agent module determines that the performance information of the second virtual instance does not meet the preset rule corresponding to the performance information, the agent module may determine that performance of the second virtual instance is abnormal. In this case, the agent module casts an abnormal vote for the second virtual instance.

When the agent module determines that the performance information of the second virtual instance meets the preset rule corresponding to the performance information, the agent module may determine that the performance of the second virtual instance is normal. In this case, the agent module casts a normal vote for the second virtual instance.

For example, when determining that the performance of the second virtual instance is abnormal, the agent module casts a score of 1 for the second virtual instance. The score of 1 indicates that the agent module casts an abnormal vote for the virtual instance. When determining that the performance of the second virtual instance is normal, the agent module casts a score of - 1 for the second virtual instance. The score of -1 indicates that the agent module casts a normal vote for the virtual instance.

It should be understood that the normal vote may be considered as a compensation vote cast by the agent module for the second virtual instance when the agent module determines, based on the performance information of the second virtual instance, that the second virtual instance is normal. When the management apparatus collects statistics on the performance score of the virtual instance in a global scope, the compensation vote can reduce improper determination of the performance information on the performance of the second virtual instance.

For a process in which the management apparatus collects statistics on the performance score of the virtual instance in a global scope, refer to the following description. Details are not described herein again.

With reference to table 2, as shown in table 3, the virtual instance 1 is a virtual instance that is run on the first network device. When the agent module detects that the performance information of the virtual instance 1 that serves as a dependency does not meet the preset rule corresponding to the performance information, the agent module casts a score of 1 for the virtual instance 1.

Further, the agent module determines whether the detected performance information of the virtual instance 2 on which the virtual instance 1 depends meets a preset rule corresponding to the performance information, and if the detected performance information does not meet the preset rule, a score of 1 is voted for the virtual instance 2. If the detected performance information meets the preset rule, a score of -1 is voted for the virtual instance 2.

**Table 3**

| Local server | Dependency server | Performance information of the dependency server | Performance score of the dependency server |
|---|---|---|---|
| Virtual instance 0 | Virtual instance 1 | Exchange delay t₁, a quantity of service requests n₁₋₁, a quantity of unresponded service requests n₁₋₂ | 1 |
| Virtual instance 1 | Virtual instance 2 | Exchange delay t₂, a quantity of service requests n₂₋₁, a quantity of unresponded service requests n₂₋₂ | 1 or -1 |

It should be understood that, in each preset period, the agent module may perform one voting scoring for the virtual instance.

S 105. The agent module obtains resource utilization information.

The resource utilization information includes first resource utilization information and second resource utilization information.

The first resource utilization information may be resource utilization information of the first network device, and the first resource utilization information is for determining resource utilization of the first network device.

Generally, the first resource utilization information may include: at least one of CPU utilization, memory utilization, disk utilization, or a network delay of the first network device.

The second resource utilization information may be resource utilization information of each virtual instance that is run on the first network device, and the second resource utilization information is for determining resource utilization of each virtual instance.

Generally, the second resource utilization information may include: at least one of CPU utilization, memory utilization, disk utilization, or a network delay of each virtual instance that is run on the first network device.

It can be learned that the first resource utilization information indicates only resource utilization information of the first network device, and the second resource utilization information indicates a type of resource utilization information. The type of resource utilization information is resource utilization information of each virtual instance that is run on the first network device.

For example, if two virtual instances, for example, a virtual instance 1 and a virtual instance 2, are run on the upstream of the first network device, the second resource utilization information includes resource utilization information of the virtual instance 1 and resource utilization information of the virtual instance 2.

S106. The agent module reports topology information, performance information, performance scores, and resource utilization information of the virtual instance to a database.

The agent module may report the topology information, performance information, performance scores, and resource utilization information of the virtual instance to the database in real time.

For example, after determining the performance information and the performance score of the virtual instance at the end of each preset period, the agent module may report the determined topology information, performance information, performance scores, and resource utilization information of the virtual instance to the database.

In this case, the resource utilization information reported by the agent module may be resource utilization information obtained by the agent module at the end of each preset period.

Alternatively, the agent module may report the topology information, performance information, performance scores, and resource utilization information of the virtual instance to the database based on preset duration as a period. The preset duration is greater than the foregoing preset period.

In this case, the resource utilization information reported by the agent module may be resource utilization information obtained by the agent module at the end of each preset duration.

Specifically, the agent module may send the determined topology information of the virtual instance that is run on the first network device, the performance information and the performance scores of the virtual instance as the dependency server indicated by the topology information, and the resource utilization information to the database via a communication interface. In response, the database obtains the information.

For example, the agent module may transmit the determined topology information of the virtual instance that is run on the first network device, the performance information and the performance scores of the virtual instance as the dependency server indicated by the topology information, and the resource utilization information to the database via a Kafka channel. In response, the database obtains the information.

It should be noted that, to save transmission resources, when reporting the topology information of the virtual instance that is run on the first network device, the agent module may report only the topology information that includes the identification number of the virtual instance that is run on the first network device and the identification number of the virtual instance on which the virtual instance depends, without reporting the topology information that includes the identification number of the virtual instance that uses the virtual instance that is run on the first network device as the dependency server.

This is because the management apparatus can determine a global topological relationship diagram based on topology information that is reported by each network device and that includes the identification number of the virtual instance that is run on the network device and the identification number of the virtual instance on which the virtual instance depends. For a specific process of determining the topological relationship diagram by the management apparatus herein, refer to descriptions of S 108 and S 109 below. Details are not described herein again.

In this case, it should be understood that, if the virtual instance that is run on the first network device serves only as a dependency server and does not depend on another virtual instance, that is, the agent module may not report topology information of the virtual instance.

It may be understood that the management system to which the public cloud tenant service management method provided in embodiments of this application is applied may include a plurality of agent modules, and the plurality of agent modules are separately deployed in a plurality of network devices. In this way, each of the plurality of agent modules may report the topology information, performance information, performance scores, and resource utilization information of the virtual instance each obtained by the plurality agent modules to the database in real time or periodically.

Correspondingly, the database may obtain the topology information, performance information, performance scores, and resource utilization information of the virtual instance reported by the plurality of agent modules.

S107. The management apparatus obtains the topology information, performance information, performance scores, and resource utilization information of the virtual instance reported by the agent module from the database.

Specifically, the management apparatus may provide a cloud service control interface for a tenant, and provide a topological relationship diagram display interface on the cloud service control interface. In this way, the management apparatus may receive a trigger command input by the tenant via the topological relationship diagram display interface.

Then, based on the trigger command, the management apparatus may obtain topology information, performance information, performance scores, and resource utilization information of a plurality of virtual instances that are reported by a plurality of agent modules and that are purchased by the tenant from the database.

For example, refer to FIG. 8. FIG. 8 shows a schematic diagram of a management apparatus receiving a trigger command of a tenant.

The tenant may log in, by using an account and a password, to a cloud service control interface provided by the management apparatus, for example, the cloud service control interface 80 shown in FIG. 8. A plurality of virtual instances purchased by the tenant through the cloud service control interface may be displayed on the cloud service control interface 80, for example, a virtual instance 1, a virtual instance 2, a virtual instance 3, and a virtual instance 4 shown in FIG. 8.

On the cloud service control interface 80, the management apparatus may provide a topological relationship diagram display interface, for example, an interface option of "displaying a topological relationship diagram 81" shown in FIG. 8. In this way, when the tenant selects the interface option of "displaying a topological relationship diagram 81" by using an input device such as a mouse (or a keyboard), it indicates that the tenant inputs the trigger command to the management apparatus. In response, the management apparatus receives the trigger command.

Then, the management apparatus may send an information obtaining request to the database based on the received trigger command, where the information obtaining request indicates to obtain the topology information, performance information, performance scores, and resource utilization information of the plurality of virtual instances purchased by the tenant from the database.

In this way, the database may send the topology information, performance information, performance scores, and resource utilization information of the virtual instances that are purchased by the tenant and that are in the information reported by the plurality of agent modules to the management apparatus based on the information obtaining request. In response, the management apparatus obtains the information.

In this way, the management apparatus may determine a topological relationship diagram of virtual instances for supporting a same application service in the plurality of virtual instances purchased by the tenant based on the obtained topology information of the plurality virtual instances. Then, the management apparatus may display the topological relationship diagram to the tenant through the cloud service control interface.

For a specific process in which the management apparatus determines the topological relationship diagram of the virtual instances for supporting the same application service in the plurality of virtual instances purchased by the tenant, refer to the description of S 108. Details are not described herein again.

Optionally, the management apparatus may further determine an abnormal virtual instance whose performance is abnormal based on the obtained performance scores and resource utilization information of the plurality of virtual instances. In this way, the management apparatus may display, to the tenant through the cloud service control interface based on the obtained performance information of the plurality of virtual instances, the topological relationship diagram marked with the performance information of each virtual instance and marked with the abnormal virtual instance.

For a detailed description of determining the abnormal virtual instance by the management apparatus, and displaying, to the tenant through the cloud service control interface, the topological relationship diagram marked with the performance information of each virtual instance and marked with the abnormal virtual instance, refer to descriptions of S 109 and S 110. Details are not described herein again.

It should be understood that the tenant may purchase a plurality of virtual instances through the cloud service control interface. The plurality of virtual instances include the virtual instances that are run on the first network device described in S101 to S105. Certainly, this is not limited thereto.

It should be understood that, after the management apparatus displays, to the tenant through the cloud service control interface, the topological relationship diagram marked with the performance information of each virtual instance and marked with the abnormal virtual instance, the management apparatus may further obtain the topology information, performance information, performance scores, and resource utilization information of the virtual instance reported by the agent module from the database in real time, or periodically obtain the topology information, performance information, performance scores, and resource utilization information of the virtual instance reported by the agent module from the database.

In this way, the management apparatus may update the topological relationship diagram currently displayed on the cloud service control interface based on the information obtained in real time or periodically. Details are not described in embodiments of this application.

S108. Based on the obtained topology information of the virtual instance, the management apparatus determines an instance cluster of virtual instances for supporting a same application service, and generates a topological relationship diagram of the instance cluster.

It can be learned from the foregoing description that the topology information of the virtual instance obtained by the management apparatus is topology information of the plurality virtual instances purchased by the tenant and reported by the plurality of agent modules to the database. In this way, based on the obtained topology information of the plurality of virtual instances purchased by the tenant, the management apparatus may determine a plurality of virtual instances that have a topological association.

Then, the management apparatus determines the plurality of virtual instances that have the topological association as one instance cluster.

It should be understood that all virtual instances in the instance cluster are for supporting a same application service. Specifically, the plurality of virtual instances in the instance cluster are respectively configured to execute different tasks or processes in the application service.

For example, if the topology information of the virtual instance obtained by the management apparatus is shown in table 4:

**Table 4**

| Local server | Dependency server |
|---|---|
| Virtual instance 1 | Virtual instance 2 |
| Virtual instance 1 | Virtual instance 3 |
| Virtual instance 2 | Virtual instance 4 |
| Virtual instance 3 | Virtual instance 4 |
| Virtual instance 5 | Virtual instance 6 |
| Virtual instance 6 | Virtual instance 7 |

Based on the topology information in table 4, it can be learned that the virtual instance 1 depends on the virtual instance 2 and the virtual instance 3, the virtual instance 2 depends on the virtual instance 4, and the virtual instance 3 depends on the virtual instance 4. In addition, any one of the virtual instances 1, 2, 3, and 4 does not have a dependency relationship with the virtual instances 5, 6, and 7. Therefore, the management apparatus may determine that there is a topological association relationship among the virtual instances 1, 2, 3, and 4, that is, the virtual instances 1, 2, 3, and 4 constitute an instance cluster 1.

In addition, based on the topology information in table 4, it can be further learned that the virtual instance 5 depends on the virtual instance 6, and the virtual instance 6 depends on the virtual instance 7. In this case, the management apparatus may determine that there is a topological association relationship among the virtual instances 5, 6, and 7. That is, the virtual instances 5, 6, and 7 constitute an instance cluster 2.

In this way, the management apparatus can generate a topological relationship diagram of the instance cluster based on the topological association relationship between virtual instances in the instance cluster.

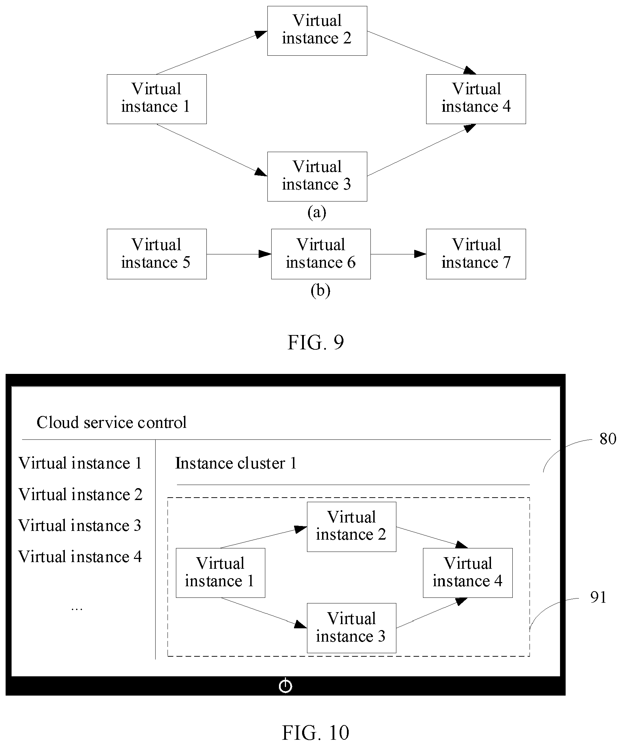

With reference to table 4, refer to FIG. 9. FIG. 9 shows a topological relationship diagram generated by a management apparatus based on the topology information in table 4.

As shown in (a) in FIG. 9, (a) in FIG. 9 shows a topological relationship diagram 91 generated by the management apparatus based on the topology information in table 4. The topological relationship diagram 91 shows a dependency relationship between the virtual instances 1, 2, 3, and 4.

As shown in (b) in FIG. 9, (b) in FIG. 9 shows a topological relationship diagram 92 generated by the management apparatus based on the topology information in table 4. The topological relationship diagram 92 shows a dependency relationship between the virtual instances 5, 6, and 7.

S109. The management apparatus determines an abnormal virtual instance whose performance is abnormal based on the obtained performance scores and resource utilization information of the plurality of virtual instances.

It can be learned from the foregoing description that, the agent module may not only vote on the virtual instance that serves as a dependency and that is run on the first network device, to obtain a performance score of the virtual instance, but also vote on a virtual instance that serves as a dependency of the virtual instance that is run on the first network device, to obtain a performance score of the virtual instance.

For example, with reference to table 4, when reporting topology information, the network device reports only topology information that includes an identification number of a virtual instance that is run on the network device and an identification number of a virtual instance on which the virtual instance depends. If the virtual instance 1 is run on a network device 1, the virtual instance 2 is run on a network device 2, the virtual instance 3 is run on a network device 3, and the virtual instance 4 is run on a network device 4, topology information 1 indicating that the virtual instance 1 depends on the virtual instance 2 and topology information 2 indicating that the virtual instance 1 depends on the virtual instance 3 may be topology information reported by the network device 1. Topology information 3 indicating that the virtual instance 2 depends on the virtual instance 4 may be topology information reported by the network device 2, and topology information 4 indicating that the virtual instance 3 depends on the virtual instance 4 may be topology information reported by the network device 3.

In this way, for the network device 1, the network device 1 may vote for the virtual instance 1 that serves as a dependency server and that is run on the network device 1, to obtain a performance score of the virtual instance 1. The network device 1 may further vote on the virtual instance 2 that serves as a dependency server of the virtual instance 1 that is run on the network device 1 and that is run on the network device 2, to obtain a performance score of the virtual instance 2. The network device 1 may further vote on the virtual instance 3 that serves as a dependency server of the virtual instance 1 that is run on the network device 1 and that is run on the network device 3, to obtain a performance score of the virtual instance 3. That is, the network device 1 may obtain the performance scores of the virtual instance 1, the virtual instance 2, and the virtual instance 3 by voting.

For the network device 2, the network device 2 may vote for the virtual instance 2 that serves as the dependency server of the virtual instance 1 and that is run on the network device 2, to obtain the performance score of the virtual instance 2. The network device 2 may further vote on the virtual instance 4 that serves as a dependency server of the virtual instance 2 and that is run on the network device 4, to obtain a performance score of the virtual instance 4. That is, the network device 2 may obtain the performance scores of the virtual instance 2 and the virtual instance 4 by voting.

For the network device 3, the network device 3 may vote for the virtual instance 3 that serves as the dependency server of the virtual instance 1 and that is run on the network device 3, to obtain the performance score of the virtual instance 3. The network device 3 may further vote on the virtual instance 4 that serves as a dependency server of the virtual instance 3 and that is run on the network device 4, to obtain the performance score of the virtual instance 4. That is, the network device 3 may obtain the performance scores of the virtual instance 3 and the virtual instance 4 by voting.

For the network device 4, the network device 4 may vote for the virtual instance 4 that serves as the dependency server of the virtual instance 2 (and/or the virtual instance 3) and that is run on the network device 4, to obtain the performance score of the virtual instance 4. That is, the network device 4 may obtain the performance score of the virtual instance 4 by voting.

In this way, after obtaining performance scores of a same virtual instance reported by the plurality of agent modules, the management apparatus may collect statistics on the obtained performance scores, to obtain performance scores obtained after different agent modules vote on the same virtual instance in a global scope.

Optionally, the management apparatus may add a sum of obtained performance scores obtained after the plurality of agent modules vote on a same virtual service, and then divide the obtained performance scores by a quantity of the plurality of agent modules, to obtain performance scores obtained after different agent modules vote on the same virtual instance in the global scope.

For example, if the management apparatus obtains the performance scores of the virtual instances shown in table 4 reported by the four agent modules deployed in the network device 1, the network device 2, the network device 3, and the network device 4, as shown in table 5:

**Table 5**

| Network device | Dependency server | Performance score |
|---|---|---|
| Network device 1 | Virtual instance 1 | 1 |
| | Virtual instance 2 | -1 |
| | Virtual instance 3 | 1 |
| Network device 2 | Virtual instance 2 | 1 |
| | Virtual instance 4 | 1 |
| Network device 3 | Virtual instance 3 | 1 |
| | Virtual instance 4 | -1 |
| Network device 4 | Virtual instance 4 | 1 |

In this way, for the virtual instance 1, the management apparatus may determine that the performance score of the virtual instance 1 is 1.

For the virtual instance 2, the management apparatus may determine that the performance score of the virtual instance 2 is (-1+1)/2 = 0.

For the virtual instance 3, the management apparatus may determine that the performance score of the virtual instance 3 is (1+1)/2 = 1.

For the virtual instance 4, the management apparatus may determine that the performance score of the virtual instance 4 is (1-1+1)/3 = 1/3.

Specifically, as shown in table 6:

**Table 6**

| Dependency server | Performance score |
|---|---|
| Virtual instance 1 | 1 |
| Virtual instance 2 | 0 |
| Virtual instance 3 | 1 |
| Virtual instance 4 | 1/3 |

Then, in a possible implementation, the management apparatus may determine a virtual instance whose performance score obtained by the virtual instance in a global scope is greater than a fourth preset threshold as an initial abnormal virtual instance.

In another possible implementation, the management apparatus may determine top m virtual instances whose performance exceptions rank in descending order in a global scope, and determine the m virtual instances as initial abnormal virtual instances. The virtual instances whose performance exceptions rank top m are virtual instances whose performance scores obtained after different agent modules vote on the virtual instances in the global scope rank top m in descending order.

It should be noted that, if global performance score rankings of at least two virtual instances are the same, that is, the global performance scores of the at least two virtual instances are the same, a virtual instance that is closer to an underlying dependency server in the same rankings is ranked top in performance.

As an example, if the virtual instance 1 depends on the virtual instance 2, and the virtual instance 2 depends on the virtual instance 3, in the virtual instance 1, the virtual instance 2 and the virtual instance 3, a virtual instance of the underlying dependency server is the virtual instance 3.

If the performance scores of the virtual instance 1, the virtual instance 2, and the virtual instance 3 determined by the management apparatus in the global scope are the same, based on the dependency relationship between the virtual instance 1, the virtual instance 2, and the virtual instance 3, the management apparatus may determine that the performance exception ranking of the virtual instance 3 is higher than the performance exception ranking of the virtual instance 2, and the performance exception ranking of the virtual instance 2 is higher than the performance exception ranking of the virtual instance 1.

After the management apparatus determines the initial abnormal virtual instance, in a possible implementation, the management apparatus may determine the determined initial abnormal virtual instance as an abnormal virtual instance whose performance is abnormal.

In another possible implementation, the management apparatus may determine an abnormal virtual instance whose performance is abnormal from the determined initial abnormal virtual instances based on the obtained resource utilization information.

Specifically, for any initial abnormal virtual instance in the determined initial abnormal virtual instances, the management apparatus may first determine a network device that runs the any initial abnormal virtual instance. Then, it is determined whether the resource utilization of the network device is normal based on the obtained first resource utilization information of the network device.

The management apparatus may determine whether the resource utilization of the network device indicated by the first resource utilization information is normal by determining whether the first resource utilization information is higher than or lower than a first threshold range.

The first threshold range may be determined based on an average value of information such as CPU utilization, memory utilization, disk utilization, or a network delay in historical first resource utilization information.

In this way, when at least one of the CPU utilization, memory utilization, disk utilization rate, or network delay in the first resource utilization information is higher than or lower than the first threshold range, the management apparatus may determine that the resource utilization of the network device indicated by the first resource utilization information is abnormal.

When all of the CPU utilization, memory utilization, disk utilization rate, or network delay in the first resource utilization information are within the first threshold range, the management apparatus may determine that the resource utilization of the network device indicated by the first resource utilization information is normal.

The management apparatus further determines whether the resource utilization of the any initial abnormal virtual instance is normal based on the obtained second resource utilization information of the any initial abnormal virtual instance.

The management apparatus may determine whether the resource utilization of the virtual instance indicated by the second resource utilization information is normal by determining whether the second resource utilization information is higher than or lower than a second threshold range.

The second threshold range may be determined based on an average value of information such as CPU utilization, memory utilization, disk utilization, or a network delay in historical second resource utilization information.

In this way, when at least one of the CPU utilization, memory utilization, disk utilization rate, or network delay in the second resource utilization information is higher than or lower than the second threshold range, the management apparatus may determine that the resource utilization of the virtual instance indicated by the second resource utilization information is abnormal.

When all of the CPU utilization, memory utilization, disk utilization rate, or network delay in the second resource utilization information are within the second threshold range, the management apparatus may determine that the resource utilization of the virtual instance indicated by the second resource utilization information is normal.

In this way, in a possible case, when resource utilization of a network device that runs the any initial abnormal virtual instance is abnormal, the management apparatus may determine that the network device is abnormal.

In this case, the management apparatus may indicate a system administrator to migrate the any initial abnormal virtual instance from the network device to another network device, to resolve a problem that a performance score currently obtained by the any initial abnormal virtual instance is abnormal.

In another possible case, when resource utilization of a network device that runs the any initial abnormal virtual instance is normal, and resource utilization of the any initial abnormal virtual instance is also normal, the management apparatus may determine that an unknown exception occurs in the any virtual instance and/or the network device.

In this case, the management apparatus may send an alarm message of the unknown exception to the system administrator.

In still another possible case, when resource utilization of a network device that runs the any initial abnormal virtual instance is normal, and resource utilization of the any initial abnormal virtual instance is abnormal, the management apparatus may further determine whether an initial abnormal virtual instance exists in another virtual instance that is run on the network device, and determine whether resource utilization of the another virtual instance is normal.

If no initial abnormal virtual instance exists in the another virtual instance, and the resource utilization of the another virtual instance is normal, the management apparatus may determine the any initial abnormal virtual instance as an abnormal virtual instance whose performance is abnormal.

If an initial abnormal virtual instance exists in the another virtual instance, and the resource utilization of the another virtual instance is abnormal, the management apparatus may determine that an unknown exception occurs in the network device and/or a virtual instance that is run on the network device. In this case, the management apparatus may send an alarm message of the unknown exception to the system administrator.

It should be understood that the foregoing system administrator may be a system administrator of a cloud service provider or a system administrator of a virtual instance abnormality detection solution provider. This is not specifically limited in embodiments of this application.

It may be understood that an execution time sequence of step S 108 and step S 109 is not limited in embodiments of this application. For example, in embodiments of this application, S 108 may be performed first, and then S 109 may be performed. Alternatively, in embodiments of this application, S 108 and S 109 may be simultaneously performed. This is not limited thereto.

S 110. The management apparatus displays the topological relationship diagram of the instance cluster to the tenant based on the obtained performance information of the virtual instance and the determined abnormal virtual instance.

Specifically, the management apparatus may display, to the tenant through the cloud service control interface, the topological relationship diagram generated in S 108.

For example, with reference to FIG. 8, refer to FIG. 10. As shown in FIG. 10, the management apparatus may display, to the tenant through the cloud service control interface 80, a topological relationship diagram 91 of an instance cluster 1 that includes a plurality of virtual instances and that is purchased by the tenant. The topological relationship diagram 91 is a topological relationship diagram 91 shown in (a) in FIG. 9 that is generated by the management apparatus based on the topology information in table 4. For detailed descriptions, refer to the foregoing descriptions. Details are not described herein again.

Optionally, the management apparatus may display performance information of each virtual instance in the topological relationship diagram displayed to the tenant through the cloud service control interface based on the obtained performance information of the virtual instance.

For descriptions of the performance information, refer to the foregoing descriptions. Details are not described herein again.

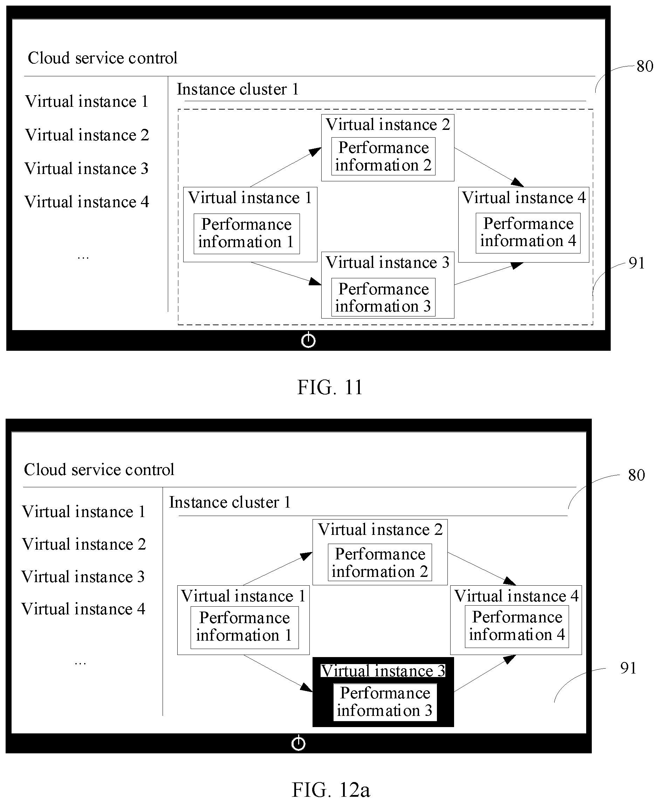

For example, with reference to FIG. 10, refer to FIG. 11. As shown in FIG. 11, the performance information of each virtual instance in the topological relationship diagram 91 is displayed by the management apparatus to the tenant through the cloud service control interface 80 in the topological relationship diagram 91.

For example, performance information 1 of the virtual instance 1 is displayed at a node of the virtual instance 1 in the topological relationship diagram 91, and performance information 2 of the virtual instance 2 is displayed at a node of the virtual instance 2 in the topological relationship diagram 91. Performance information 3 of the virtual instance 3 is displayed at a node of the virtual instance 3 in the topological relationship diagram 91, and performance information 4 of the virtual instance 4 is displayed at a node of the virtual instance 4 in the topological relationship diagram 91.

Optionally, the management apparatus may further mark an abnormal virtual instance in the topological relationship diagram displayed to the tenant through the cloud service control interface based on the abnormal virtual instance determined in S109.

A specific implementation of marking an abnormal virtual instance is not specifically limited in embodiments of this application. For example, a node at which the abnormal virtual instance is located in the topological relationship diagram may be marked in red, and a node at which another virtual instance in the topological relationship diagram other than the abnormal virtual instance is located is marked in green. Alternatively, mark a background color of a node at which an abnormal virtual instance is located in the topological relationship diagram as black, and mark a background color of a node at which another virtual instance in the topological relationship diagram other than the abnormal virtual instance is located as white. Certainly, this is not limited thereto.

For example, with reference to FIG. 11, refer to FIG. 12a. If the management apparatus determines, based on the method in S 109, that the virtual instance 3 in the topological relationship diagram 91 is an abnormal virtual instance, as shown in FIG. 12a, in the topological relationship diagram 91 displayed by the management apparatus to a tenant through the cloud service control interface 80, the background color of the node at which the abnormal virtual instance (virtual instance 3) is located is black. The background color of the node at which virtual instances other than the abnormal virtual instance (namely, the virtual instance 1, the virtual instance 2, and the virtual instance 4) are located is white.

It should be understood that, if the plurality of virtual instances purchased by the tenant through the cloud service control interface include virtual instances that support different application services, the management apparatus may display the topological relationship diagram of the plurality of instance clusters that support different application services through the cloud service control interface of the tenant.

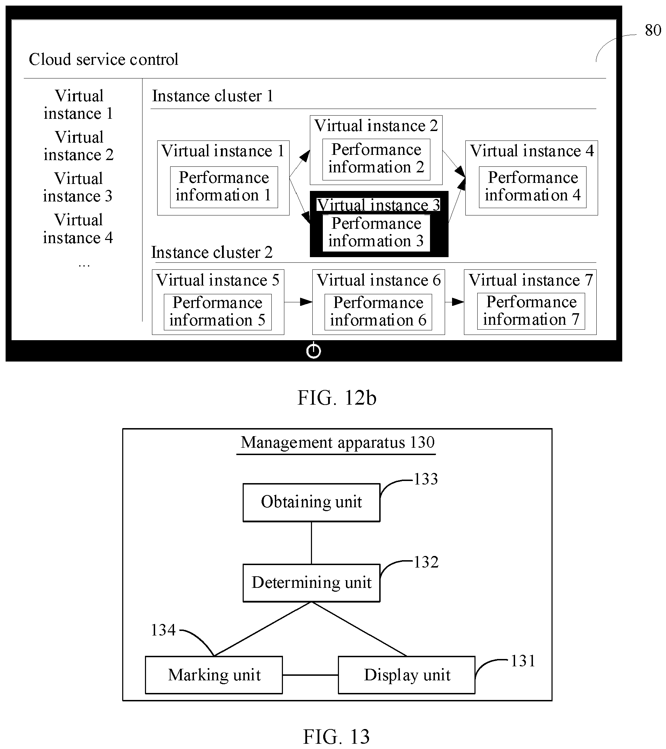

For example, with reference to FIG. 11 and FIG. 12a, refer to FIG. 12b. If the management apparatus determines, based on the method in S109, that the topological relationship diagram of the instance clusters that support different application services and that are of the tenant include a topological relationship diagram 91 and a topological relationship diagram 92, as shown in FIG. 12b, the management apparatus may display the topological relationship diagram 91 and the topological relationship diagram 92 to the tenant through the cloud service control interface 80.

Based on FIG. 10, FIG. 11, FIG. 12a, and FIG. 12b, it can be learned that the topological relationship diagram of the virtual instances purchased by the tenant is displayed on the cloud service control interface of the tenant, and real-time performance information of each virtual instance is displayed on the topological relationship diagram. In addition, an abnormal virtual instance is marked on the topological relationship diagram, so that the tenant can intuitively learn a performance status of a virtual instance purchased by the tenant, and perform corresponding processing when detecting the abnormal virtual instance, thereby ensuring normal running of an application service provided by the tenant for an end user.

In conclusion, embodiments of this application provide a public cloud tenant service management method. In the method, a dependency relationship between a plurality of virtual instances purchased by a tenant is determined by collecting packet header information, and a topological relationship diagram indicating a topological association relationship between virtual instances in an instance cluster that supports a same application service is further generated based on the dependency relationship between the plurality of virtual instances. A virtual instance having the topological association relationship is a virtual instance having a dependency relationship. Further, based on the method, the topological relationship diagram is displayed to the tenant, so that the topological relationship between the virtual instances in the instance cluster is visualized, and user experience when the tenant manages the plurality of virtual instances purchased by the tenant is improved.

Further, based on the method provided in embodiments of this application, performance information of the virtual instance is determined by using the collected packet header information, and the performance information of the virtual instance is displayed in the topological relationship diagram. User experience when the tenant manages the plurality of virtual instances purchased by the tenant is further improved.

Still further, based on the method provided in embodiments of this application, an abnormal virtual instance is determined by using the collected packet header information, and the abnormal virtual instance is marked in the topological relationship diagram. In this way, an alarm is reported to a user when the virtual instance is abnormal. That is, user experience when the tenant manages the plurality of virtual instances purchased by the tenant is further improved.

In addition, embodiments of this application provide a method for determining an abnormal virtual instance by using the collected packet header information. Compared with a method in which a performance exception of a virtual instance is determined in a manner of deploying a detection module inside a virtual instance, detecting resource utilization of the virtual instance by using the detection module, and/or detecting network performance of the virtual instance by performing a ping operation using the detection module based on an internet control message protocol (internet control message protocol, ICMP), accuracy of locating the abnormal virtual instance can be improved, and security of user data can be improved through the method provided in embodiments of this application.

This is because pure resource utilization information cannot actually reflect a performance exception of a virtual instance, and a network delay detected by a ping operation cannot directly reflect a performance status of a virtual instance. Therefore, the method in which the performance exception of the virtual instance is determined in the manner of detecting the resource utilization of the virtual instance by using the detection module, and/or detecting the network performance of the virtual instance by performing the ping operation using the detection module based on the ICMP has poor positioning accuracy. That is, the abnormal virtual instance determined in this manner may not be a real virtual instance with abnormal performance.

However, based on the method provided in embodiments of this application, the performance information of the virtual instance may be determined based on the collected packet header information. In this way, based on the performance information and the resource utilization information, an abnormal virtual instance with abnormal performance is located with high positioning accuracy.

In addition, the detection module is deployed in the virtual instance for intrusive detection, which infringes on privacy of user data. However, in the method provided in embodiments of this application, only the packet header information of the service packet needs to be collected, and data information of the service packet is not involved. That is, the method provided in embodiments of this application can ensure the privacy of the user data, that is, improve the security of the user data.

The foregoing mainly describes the solutions provided in embodiments of this application from a perspective of a method. To implement the foregoing functions, corresponding hardware structures and/or software modules for performing the functions are included. A person skilled in the art should easily be aware that the units and algorithm steps in the examples described with reference to embodiments disclosed in this specification can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions of each particular application, but it should not be considered that the implementation goes beyond the scope of this application.

In embodiments of this application, the management apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software function module. It should be noted that, the module division in embodiments of this application is an example, and is merely logical function division. There may be another division manner in an actual implementation.

As shown in FIG. 13, FIG. 13 shows a schematic structural diagram of a management apparatus 130 according to an embodiment of this application. The management apparatus 130 may be run on a cloud platform, and is configured to perform the foregoing public cloud tenant service management method, for example, configured to perform the method shown in FIG. 4. The management apparatus 130 may include a display unit 131 and a determining unit 132.

The display unit 131 is configured to provide a cloud service control interface. The determining unit 132 is configured to: determine a plurality of virtual instances purchased by a tenant through the cloud service control interface, and determine an instance cluster of virtual instances for supporting a same application service from the plurality of virtual instances. The display unit 131 is further configured to display a topological relationship diagram of the virtual instances in the instance cluster on the cloud service control interface.

For example, with reference to FIG. 4, the display unit 131 may be configured to perform step S110, and the determining unit 132 may be configured to perform step S108.

Optionally, the management apparatus 130 further includes an obtaining unit 133. The display unit 131 is further configured to provide a topological relationship diagram display interface. The topological relationship diagram display interface is configured to receive a trigger command input by the tenant. The obtaining unit 133 is configured to obtain topology information of the virtual instances in the instance cluster based on the trigger command. The display unit 131 is configured to display the topological relationship diagram of the virtual instances in the instance cluster obtained based on the topology information on the cloud service control interface.

For example, with reference to FIG. 4, the display unit 131 may be configured to perform step S110, and the obtaining unit 133 may be configured to perform step S107.

Optionally, the topology information is determined based on packet header information of a connection establishment request acknowledgment packet for establishing connection communication when the connection communication is established between any two virtual instances in the plurality of virtual instances.

Optionally, the obtaining unit 133 is further configured to obtain performance information of each virtual instance in the instance cluster. The display unit 131 is further configured to display the performance information of each virtual instance in the instance cluster in the foregoing topological relationship diagram.

For example, with reference to FIG. 4, the obtaining unit 133 may be configured to perform step S107, and the display unit 131 may be configured to perform step S110.

Optionally, for any virtual instance in the foregoing instance cluster, performance information of the any virtual instance is determined based on packet header information of a packet sent or received by the any virtual instance when the any virtual instance serves as a dependency server.

Optionally, the packet header information includes a source address, a source port, a destination address, and a destination port of the packet.

Optionally, for any virtual instance in the foregoing instance cluster, the performance information of the any virtual instance includes: in a preset period, at least one of a packet exchange delay of the any virtual instance, a quantity of service requests received by the any virtual instance, or a quantity of service requests to which the any virtual instance does not respond.

Optionally, the performance information of each virtual instance in the instance cluster is for determining a performance score of each virtual instance when the application service is implemented. The performance score of each virtual instance when the foregoing application service is implemented is for determining an abnormal virtual instance.

The management apparatus 130 further includes: a marking unit 134, configured to mark the abnormal virtual instance whose performance is abnormal in the instance cluster in the topological relationship diagram.

For example, with reference to FIG. 4, the marking unit 134 may be configured to perform step S110.

Optionally, if a performance score higher than a threshold exists in the performance score of each virtual instance in the instance cluster when the application service is implemented, a virtual instance whose performance score is higher than the threshold is an abnormal virtual instance.

If no performance score higher than a threshold exists in the performance score of each virtual instance in the instance cluster when the application service is implemented, no abnormal virtual instance exists in the instance cluster.

Optionally, the obtaining unit 133 is further configured to: obtain first resource utilization information of a network device that runs each virtual instance in the instance cluster; and obtain second resource utilization information of each virtual instance in the instance cluster. The first resource utilization information is for determining resource utilization of the network device, and the second resource utilization information is for determining resource utilization of the virtual instance.

The determining unit 132 is further configured to determine the abnormal virtual instance based on the first resource utilization information, the second resource utilization information, and the performance score of each virtual instance when the application service is implemented.

For example, with reference to FIG. 4, the obtaining unit 133 may be configured to perform step S107, and the determining unit 132 may be configured to perform step S109.

Optionally, the first resource utilization information includes at least one of CPU utilization, memory utilization, disk utilization, or a network delay of the network device. The second resource utilization information includes at least one of CPU utilization, memory utilization, disk utilization, or a network delay of the virtual instance.

Optionally, the virtual instance includes any one of a virtual machine instance or a container instance.

Optionally, the node that implements the foregoing application service may include a load balancing node, an application server node, and a database node. Functions of the load balancing node, the application server node, and the database node may be separately implemented by using different virtual instances.

For a detailed description of the foregoing optional implementations, refer to the foregoing method embodiments. Details are not described herein again. In addition, the explanation of any management apparatus 130 provided above and the description of beneficial effects can refer to the corresponding method embodiments mentioned above. Details are not described again.

For example, with reference to FIG. 1, the display unit 131 in the management apparatus 130 may implement its functions by using the input/output interface 14 in FIG. 1. The determining unit 132 and the marking unit 134 may implement their functions by executing program code in the memory 12 in FIG. 1 through the processor 11 in FIG. 1. The obtaining unit 133 may implement its function by using the communication interface 13 in FIG. 1.

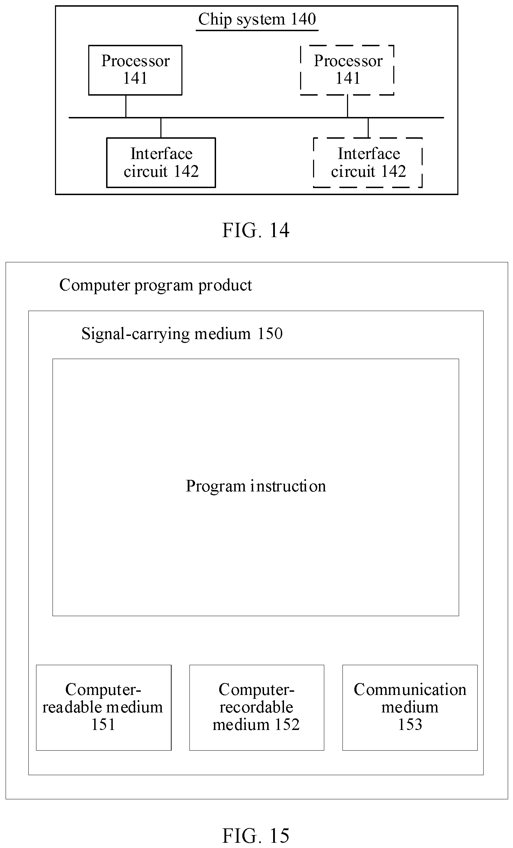

Embodiments of this application further provide a chip system 140. As shown in FIG. 14, the chip system 140 includes at least one processor and at least one interface circuit.

For example, when the chip system 140 includes one processor and one interface circuit, the processor may be a processor 141 shown in a solid-line box (or a processor 141 shown in a dotted-line box) in FIG. 14. The interface circuit may be an interface circuit 142 shown in a solid box (or an interface circuit 142 shown in a dotted-line box) in FIG. 14.

When the chip system 140 includes two processors and two interface circuits, the two processors include the processor 141 shown in the solid-line box and the processor 141 shown in the dotted-line box in FIG. 14. The two interface circuits include the interface circuit 142 shown in the solid-line box and the interface circuit 142 shown in the dotted-line box in FIG. 14. This is not limited.

The processor 141 and the interface circuit 142 may be interconnected via a line. For example, the interface circuit 142 may be configured to receive a signal (for example, obtaining topology information, performance information, performance scores, and resource utilization information of the virtual instance reported by the agent module). For another example, the interface circuit 142 may be configured to send a signal to another apparatus (for example, the processor 141).

For example, the interface circuit 142 may read instructions stored in the memory, and send the instructions to the processor 141. When the instructions are executed by the processor 141, the apparatus for verifying an AS pair may be enabled to perform the steps in the foregoing embodiment. Certainly, the chip system 140 may further include another discrete device. This is not specifically limited in embodiments of this application.

Another embodiment of this application further provides a computer-readable storage medium. The computer-readable storage medium stores instructions. When the instructions are run on a management apparatus, the management apparatus performs steps performed by the management apparatus in the method procedure shown in the foregoing method embodiments.

In some embodiments, the disclosed methods may be implemented as computer program instructions encoded in a machine-readable format on a computer-readable storage medium or on another non-transitory medium or an artifact.

FIG. 15 schematically shows a conceptual partial view of a computer program product according to an embodiment of this application. The computer program product includes a computer program for executing a computer process on a computing device.

In one embodiment, the computer program product is provided using a signal-carrying medium 150. The signal-carrying medium 150 may include one or more program instructions that, when run by one or more processors, may provide the functions or some of the functions described above with respect to FIG. 4. Thus, for example, refer to FIG. 4. One or more features in S101 to S 110 may be undertaken by one or more instructions associated with the signal-carrying medium 150. In addition, the program instructions in FIG. 15 also describe example instructions.

In some examples, the signal-carrying medium 150 may include a computer-readable medium 151, such as, but not limited to, a hard disk drive, a compact disk (CD), a digital video disc (DVD), a digital magnetic tape, a memory, a read-only memory (read-only memory, ROM), or a random access memory (random access memory, RAM) and so on.

In some embodiments, the signal-carrying medium 150 may include a computer recordable medium 152, such as, but not limited to, a memory, a read/write (R/W) CD, an R/W DVD, and the like.

In some embodiments, the signal-carrying medium 150 may include a communication medium 153, such as, but not limited to, a digital and/or analog communication medium (for example, fiber optic cables, waveguides, wired communication links, and wireless communication links).

The signal-carrying medium 150 may be conveyed by the communication medium 153 in a wireless form (for example, a wireless communication medium that complies with the IEEE 1202.11 standard or another transmission protocol). The one or more program instructions may be, for example, computer-executable instructions or logically implemented instructions.

In some examples, the management apparatus, such as described with respect to FIG. 4, may be configured to provide various operations, functions, or actions in response to one or more program instructions through the computer-readable medium 151, the computer recordable medium 152, and/or the communication medium 153.

It should be understood that the arrangements described herein are for example purposes only. Thus, those skilled in the art will appreciate that other arrangements and other elements (for example, a machine, an interface, a function, a sequence, and a function group) can be used instead, and some elements can be omitted together depending on the expected result.

In addition, many of the elements described are functional entities that may be implemented as discrete or distributed components, or in any suitable combination and location in conjunction with other components.

All or a part of the foregoing embodiments may be implemented by software, hardware, firmware, or any combination thereof. When a software program is used to implement the embodiments, all or a part of the embodiments may be implemented in a form of a computer program product. The computer program product includes one or more computer instructions. When the computer-executable instructions are loaded and executed on a computer, the procedures, or functions based on embodiments of this application are all or partially generated.

The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner.

The computer-readable storage medium may be any usable medium accessible by a computer, or a data storage device integrating one or more usable media, for example, a server or a data center. The usable medium may be a magnetic medium (for example, a floppy disk, a hard disk, or a magnetic tape), an optical medium (for example, a DVD), a semiconductor medium (for example, a solid-state disk (solid state disk, SSD)), or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A public cloud tenant service management method, wherein the method is run on a cloud platform, and the method comprises:
providing a cloud service control interface;
determining a plurality of virtual instances purchased by a tenant through the cloud service control interface;
determining, in the plurality of virtual instances, an instance cluster of virtual instances for supporting a same application service; and
displaying a topological relationship diagram of the virtual instances in the instance cluster on the cloud service control interface.

2. The method according to claim 1, wherein the displaying a topological relationship diagram of the virtual instances in the instance cluster on the cloud service control interface comprises:
providing a topological relationship diagram display interface, wherein the topological relationship diagram display interface is configured to receive a trigger command input by the tenant;
obtaining topology information of the virtual instances in the instance cluster based on the trigger command; and
displaying the topological relationship diagram of the virtual instances in the instance cluster on the cloud service control interface, wherein the topological relationship diagram is obtained based on the topology information.

3. The method according to claim 1 or 2, wherein the topology information is determined based on packet header information of a connection establishment request acknowledgment packet for establishing connection communication when the connection communication is established between any two virtual instances in the plurality of virtual instances.

4. The method according to any one of claims 1 to 3, wherein the method further comprises:
obtaining performance information of each virtual instance in the instance cluster; and
displaying the performance information of each virtual instance in the instance cluster in the topological relationship diagram.

5. The method according to claim 4, wherein
for any virtual instance in the instance cluster, performance information of the any virtual instance is determined based on packet header information of a packet sent or received by the any virtual instance when the any virtual instance serves as a dependency server.

6. The method according to claim 5, wherein the packet header information comprises a source address, a source port, a destination address, and a destination port of the packet.

7. The method according to any one of claims 4 to 6, wherein
for any virtual instance in the instance cluster, the performance information of the any virtual instance comprises: in a preset period, at least one of a packet exchange delay of the any virtual instance, a quantity of service requests received by the any virtual instance, or a quantity of service requests to which the any virtual instance does not respond.

8. The method according to any one of claims 4 to 7, wherein the performance information of each virtual instance in the instance cluster is for determining a performance score of each virtual instance when the application service is implemented, and the performance score of each virtual instance when the application service is implemented is for determining an abnormal virtual instance whose performance is abnormal; and
the method further comprises:
marking the abnormal virtual instance in the instance cluster in the topological relationship diagram.

9. The method according to claim 8, wherein
if a performance score higher than a threshold exists in the performance score of each virtual instance in the instance cluster when the application service is implemented, a virtual instance whose performance score is higher than the threshold is an abnormal virtual instance; and
if no performance score higher than a threshold exists in the performance score of each virtual instance in the instance cluster when the application service is implemented, no abnormal virtual instance exists in the instance cluster.

10. The method according to claim 8, wherein the method further comprises:
obtaining first resource utilization information of a network device that runs each virtual instance in the instance cluster, and obtaining second resource utilization information of each virtual instance in the instance cluster, wherein the first resource utilization information is for determining resource utilization of the network device, and the second resource utilization information is for determining resource utilization of the virtual instance; and
determining the abnormal virtual instance based on the first resource utilization information, the second resource utilization information, and the performance score of each virtual instance when the application service is implemented.

11. The method according to claim 10, wherein the first resource utilization information comprises at least one of central processing unit CPU utilization, memory utilization, disk utilization, or a network delay of the network device.

12. The method according to any one of claims 1 to 11, wherein the virtual instance comprises any one of a virtual machine instance or a container instance.

13. The method according to any one of claims 1 to 12, wherein a node implementing the application service comprises a load balancing node, an application server node, and a database node, wherein functions of the load balancing node, the application server node, and the database node are separately implemented by using different virtual instances.

14. A public cloud tenant service management apparatus, wherein the apparatus is run on a cloud platform, and the apparatus comprises:
a display unit, configured to provide a cloud service control interface;
a determining unit, configured to determine a plurality of virtual instances purchased by a tenant through the cloud service control interface; and determine, in the plurality of virtual instances, an instance cluster of virtual instances for supporting a same application service; and
the display unit, further configured to display a topological relationship diagram of the virtual instances in the instance cluster on the cloud service control interface.

15. The apparatus according to claim 14, wherein the apparatus further comprises an obtaining unit; and
the display unit is further configured to provide a topological relationship diagram display interface, wherein the topological relationship diagram display interface is configured to receive a trigger command input by the tenant;
the obtaining unit is configured to obtain topology information of the virtual instances in the instance cluster based on the trigger command; and
the display unit is configured to display the topological relationship diagram of the virtual instances in the instance cluster on the cloud service control interface, wherein the topological relationship diagram is obtained based on the topology information.

16. The apparatus according to claim 14 or 15, wherein the topology information is determined based on packet header information of a connection establishment request acknowledgment packet for establishing connection communication when the connection communication is established between any two virtual instances in the plurality of virtual instances.

17. The apparatus according to any one of claims 14 to 16, wherein
the obtaining unit is further configured to obtain performance information of each virtual instance in the instance cluster; and
the display unit is further configured to display the performance information of each virtual instance in the instance cluster in the topological relationship diagram.

18. The apparatus according to claim 17, wherein
for any virtual instance in the instance cluster, performance information of the any virtual instance is determined based on packet header information of a packet sent or received by the any virtual instance when the any virtual instance serves as a dependency server.

19. The apparatus according to claim 18, wherein the packet header information comprises a source address, a source port, a destination address, and a destination port of the packet.

20. The apparatus according to any one of claims 17 to 19, wherein
for any virtual instance in the instance cluster, the performance information of the any virtual instance comprises: in a preset period, at least one of a packet exchange delay of the any virtual instance, a quantity of service requests received by the any virtual instance, or a quantity of service requests to which the any virtual instance does not respond.

21. The apparatus according to any one of claims 17 to 20, wherein
the performance information of each virtual instance in the instance cluster is for determining a performance score of each virtual instance when the application service is implemented, and the performance score of each virtual instance when the application service is implemented is for determining an abnormal virtual instance whose performance is abnormal; and
the apparatus further comprises:
a marking unit, configured to mark the abnormal virtual instance in the instance cluster in the topological relationship diagram.

22. The apparatus according to claim 21, wherein
if a performance score higher than a threshold exists in the performance score of each virtual instance in the instance cluster when the application service is implemented, a virtual instance whose performance score is higher than the threshold is an abnormal virtual instance; and
if no performance score higher than a threshold exists in the performance score of each virtual instance in the instance cluster when the application service is implemented, no abnormal virtual instance exists in the instance cluster.

23. The apparatus according to claim 21, wherein
the obtaining unit is further configured to obtain first resource utilization information of a network device that runs each virtual instance in the instance cluster, and obtain second resource utilization information of each virtual instance in the instance cluster, wherein the first resource utilization information is for determining resource utilization of the network device, and the second resource utilization information is for determining resource utilization of the virtual instance; and
the determining unit is further configured to determine the abnormal virtual instance based on the first resource utilization information, the second resource utilization information, and the performance score of each virtual instance when the application service is implemented.

24. The apparatus according to claim 23, wherein the first resource utilization information comprises at least one of central processing unit CPU utilization, memory utilization, disk utilization, or a network delay of the network device.

25. The apparatus according to any one of claims 14 to 24, wherein the virtual instance comprises any one of a virtual machine instance or a container instance.

26. The apparatus according to any one of claims 14 to 25, wherein a node implementing the application service comprises a load balancing node, an application server node, and a database node, wherein functions of the load balancing node, the application server node, and the database node are separately implemented by using different virtual instances.

27. A public cloud tenant service management apparatus, wherein the apparatus comprises: a memory and one or more processors, wherein the memory is configured to store computer instructions, and the processor is configured to invoke the computer instructions, to perform the method according to any one of claims 1 to 13.

28. A public cloud tenant service management system, wherein the system comprises the public cloud tenant service management apparatus according to any one of claims 14 to 26, and a plurality of agent modules, wherein the plurality of agent modules are separately deployed in different network devices; and
for any agent module of the plurality of agent modules, the any agent module is configured to obtain at least one of topology information, performance information, a performance score, or resource utilization information of a virtual instance, wherein the resource utilization information comprises resource utilization information of a network device in which the any agent module is deployed, and resource utilization information of a virtual instance that is run on the network device.

29. A computer-readable storage medium, wherein a computer program is stored on the computer-readable storage medium, and when the computer program is run on a computer, the computer is enabled to perform the method according to any one of claims 1 to 13.
